# EUROPEAN PATENT APPLICATION

(11) **EP 4 723 741 A1**
(43) Date of publication of application: **08.04.2026**
(21) Application number: 24204731.4
(22) Date of filing: 04.10.2024
(51) Int. Cl.: H04W 36/36, H04W 74/00, H04W 74/0833

(54) **CONDITIONAL HANDOVER WITH PRACH ADAPTATION**

(71) Applicant: Nokia Technologies Oy, 02610 Espoo (FI)
(72) Inventor: Khlass, Ahlem, 91300 Massy (FR); Hassan, Mohamad Sayed, 91360 Epinay sur-orge (FR); Koskela, Jarkko Tuomo, 90510 Oulu (FI)
(74) Representative: Samson & Partner Patentanwälte mbB

(57) **Abstract**

There are provided measures for (e.g. enabling/facilitating/realizing) conditional handover with PRACH adaptation (or, stated differently, additional PRACH resources). Such measures may, for example, comprise that a user equipment receives, from a base station of a serving cell of the user equipment, a conditional handover configuration for a conditional handover of the user equipment and an indication of a resource configuration of one or more additional physical random access channel, PRACH, resources at a candidate target cell of the conditional handover, identifies the candidate target cell as a target cell of the conditional handover, and transmits, to the base station of the serving cell of the user equipment, a request for informing about activation of the one or more additional PRACH resources configured at the candidate target cell.

## Description

### TECHNICAL FIELD

This disclosure generally refers to mobile or wireless communication technology and systems. Various example embodiments relate to measures/mechanisms (including, e.g. methods, apparatuses and computer program products) for enabling (or otherwise facilitating or realizing) conditional handover with PRACH adaptation (or, stated differently, additional PRACH resources).

### BACKGROUND

Examples of mobile or wireless communication technology and systems may include Universal Mobile Telecommunications System (UMTS), e.g. UMTS Terrestrial Radio Access Network (UTRAN), Long Term Evolution (LTE), e.g. LTE Evolved UTRAN (E-UTRAN), LTE-Advanced (LTE-A), MulteFire, LTE-A Pro, Fifth Generation (5G) or New Radio (NR), e.g. 5G/NR radio access technology, Sixth Generation (6G), e.g. 6G radio access technology, or the like. At least 5G systems, but potentially also 6G systems, refer to the next generation (NG) of radio systems and network architecture. 5G and 6G network technology is based on new radio (NR) technology, but the 5G/6G (or NG) network can also build on E-UTRAN radio. It is estimated that 5G/NR may provide bitrates on the order of 10-20 Gbit/s or higher and may support at least enhanced mobile broadband (eMBB) and ultra-reliable low-latency communication (URLLC) as well as massive machine-type communication (mMTC) services. 5G/NR is expected to deliver extreme broadband and ultra-robust, low-latency connectivity and massive networking to support the Internet of Things (IoT).

### LIST OF ACRONYMS AND ABBREVIATIONS

- 3GPP: 3rd Generation Partnership Project
- 5G: Fifth Generation
- 6G: Sixth Generation
- AMF: Access and Mobility Management Function
- CHO: Conditional Handover
- CE: Control Element
- DCI: Downlink Control Information
- N3IWF: Non-3GPP InterWorking Function
- NES: Network Energy Saving
- NFV(I): Network Function Virtualization (Infrastructure)
- NR: New Radio
- MAC: Medium Access Control
- PDCCH: Physical Downlink Control Channel
- PRACH: Physical Random Access Channel
- PRB: Physical Resource Block
- RACH: Random Access Channel
- RAT: Radio Access Technology
- RO: RACH Occasion
- RRC: Radio Resource Control
- SR: Scheduling Request
- TNGF: Trusted Non-3GPP Gateway Function
- UE: User Equipment
- UPF: User Plane Function
- W-AGF: Wireless Access Gateway Function

### SUMMARY

Various example embodiments address at least part of issues described herein or otherwise recognized by a person skilled in the art in view of this disclosure.

Various example embodiments are set out in the claims.

Some of the various example embodiments are described with respect to certain aspects. These aspects are not intended to indicate key or essential features of the various example embodiments, nor are they intended to be used to limit the scope of thereof. Other features, aspects, and elements will be recognized by a person skilled in the art in view of this disclosure.

According to an example aspect, there is provided a method for or (operable) at a user equipment, comprising: configuring for a conditional handover of the user equipment from a serving cell of the user equipment to a candidate target cell of the conditional handover, and obtaining information about usability of one or more additional physical random access channel, PRACH, resources, which are configured at the candidate target cell for the conditional handover.

According to an example aspect, there is provided a user equipment (or part, entity, element, chipset, module, etc. thereof), comprising: at least one processor; and at least one memory storing instructions that, when executed by the at least one processor, cause the user equipment at least to: configure for a conditional handover of the user equipment from a serving cell of the user equipment to a candidate target cell of the conditional handover, and obtain information about usability of one or more additional physical random access channel, PRACH, resources, which are configured at the candidate target cell for the conditional handover.

According to an example aspect, there is provided a user equipment (or part, entity, element, chipset, module, etc. thereof), comprising: means for configuring for a conditional handover of the user equipment from a serving cell of the user equipment to a candidate target cell of the conditional handover, and means for obtaining information about usability of one or more additional physical random access channel, PRACH, resources, which are configured at the candidate target cell for the conditional handover.

According to an example aspect, there is provided a user equipment (or part, entity, element thereof), comprising: circuitry configured to configure for a conditional handover of the user equipment from a serving cell of the user equipment to a candidate target cell of the conditional handover, and circuitry configured to obtain information about usability of one or more additional physical random access channel, PRACH, resources, which are configured at the candidate target cell for the conditional handover.

According to various developments/modifications, any one of the aforementioned method-related and/or apparatus-related example aspects may include one or more of the following features (e.g. corresponding functionalities, operations, processors/instructions, means, circuitry):
determining, based on the information about usability, one or more additional PRACH resources configured at the candidate target cell, which are usable for the conditional handover,
the information about usability indicates activation of the one or more additional PRACH resources configured at the candidate target cell,
determining, based on the information about usability, that one or more additional PRACH resources configured at the candidate target cell are activated or deactivated, wherein any activated additional PRACH resource is usable for the conditional handover,
initiating, based on the information about usability, execution of the conditional handover using one of: one or more additional PRACH resources configured at the candidate target cell, which are usable for the conditional handover, or one or more legacy PRACH resources configured at the candidate target cell,
inquiring the information about usability from a base station of the serving cell of the user equipment, and obtaining the information about usability from the base station of the serving cell of the user equipment,
transmitting, to the base station of the serving cell of the user equipment, a request for informing about activation of the one or more additional PRACH resources configured at the candidate target cell,
receiving, from the base station of the serving cell of the user equipment, a response comprising an indication of the one or more additional PRACH resources configured at the candidate target cell being activated or deactivated,
receiving, from the base station of the serving cell of the user equipment, a response comprising an indication of different one or more additional PRACH resources configured at the candidate target cell being activated,
receiving, from the base station of the serving cell of the user equipment, no response at least within a predetermined time period or a response comprising an indication of absence of a response from the candidate target cell,
determining, based on a response from the base station of the serving cell, that the one or more additional PRACH resources configured at the candidate target cell are activated or deactivated,
determining, based on a response from the base station of the serving cell, that the one or more additional PRACH resources configured at the candidate target cell are activated or deactivated, and the different one or more additional PRACH resources configured at the candidate target cell are activated,
determining, based on absence of a response from the base station of the serving cell or a response comprising an indication of absence of a response from the candidate target cell, that the one or more additional PRACH resources configured at the candidate target cell are deactivated,
upon evaluating fulfillment of one or more conditional handover conditions and/or identifying the candidate target cell as a target cell for the conditional handover, transmitting, to the base station of the serving cell of the user equipment, a request for informing about activation of the one or more additional PRACH resources configured at the candidate target cell,
obtaining the information about usability from a base station of the serving cell of the user equipment,
determining, based on the information about activation, that the one or more additional PRACH resources configured at the candidate target cell are activated or deactivated,
determining, based on the information about activation, that the one or more additional PRACH resources configured at the candidate target cell are activated or deactivated, and the different one or more additional PRACH resources configured at the candidate target cell are activated,
upon obtaining the information about usability from a base station of the serving cell of the user equipment, evaluating fulfillment of one or more conditional handover conditions and/or identifying the candidate target cell as a target cell for the conditional handover,
receiving, from the base station of the serving cell of the user equipment, a conditional handover configuration for the conditional handover of the user equipment,
receiving, from the base station of the serving cell of the user equipment, an indication of the one or more additional PRACH resources configured at the candidate target cell for the conditional handover,
evaluating fulfillment of one or more conditional handover conditions,
identifying the candidate target cell as a target cell for the conditional handover when one or more conditional handover conditions are evaluated to be fulfilled for the candidate target cell,
the one or more additional PRACH resources comprise PRACH resources being configured at the candidate target cell for the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a base station of a serving cell of a user equipment, comprising: configuring for a conditional handover of the user equipment from the serving cell of the user equipment to a candidate target cell of the conditional handover, and providing information, for the user equipment, about usability of one or more additional physical random access channel, PRACH, resources, which are configured at the candidate target cell of the conditional handover, for the conditional handover.

According to an example aspect, there is provided a base station (or part, entity, element, chipset, module, etc. thereof) of a serving cell of a user equipment, comprising: at least one processor; and at least one memory storing instructions that, when executed by the at least one processor, cause the user equipment at least to: configure for a conditional handover of the user equipment from the serving cell of the user equipment to a candidate target cell of the conditional handover, and provide information, for the user equipment, about usability of one or more additional physical random access channel, PRACH, resources, which are configured at the candidate target cell of the conditional handover, for the conditional handover.

According to an example aspect, there is provided a base station (or part, entity, element, chipset, module, etc. thereof) of a serving cell of a user equipment, comprising: means for configuring for a conditional handover of the user equipment from the serving cell of the user equipment to a candidate target cell of the conditional handover, and means for providing information, for the user equipment, about usability of one or more additional physical random access channel, PRACH, resources, which are configured at the candidate target cell of the conditional handover, for the conditional handover.

According to an example aspect, there is provided a base station (or part, entity, element thereof) of a serving cell of a user equipment, comprising: circuitry configured to configure for a conditional handover of the user equipment from the serving cell of the user equipment to a candidate target cell of the conditional handover, and circuitry configured to provide information, for the user equipment, about usability of one or more additional physical random access channel, PRACH, resources, which are configured at the candidate target cell of the conditional handover, for the conditional handover.

According to various developments/modifications, any one of the aforementioned method-related and/or apparatus-related example aspects may include one or more of the following features (e.g. corresponding functionalities, operations, processors/instructions, means, circuitry):
the information about usability indicates activation of the one or more additional PRACH resources configured at the candidate target cell,
the information about usability enables determination that one or more additional PRACH resources configured at the candidate target cell are activated or deactivated, wherein any activated additional PRACH resource is usable for the conditional handover,
obtaining an inquiry for the information about usability from the user equipment, and providing the information about usability to the user equipment,
receiving, from the user equipment, a request for informing about activation of the one or more additional PRACH resources configured at the candidate target cell,
transmitting, to the user equipment, a response comprising an indication of the one or more additional PRACH resources configured at the candidate target cell being activated or deactivated,
transmitting, to the user equipment, a response comprising an indication of different one or more additional PRACH resources configured at the candidate target cell being activated,
transmitting, to the user equipment, no response or a response comprising an indication of absence of a response from the candidate target cell,
transmitting, to the base station of the candidate target cell, a request for informing about activation of the one or more additional PRACH resources configured at the candidate target cell,
receiving, from the base station of the candidate target cell, a response comprising an indication of the one or more additional PRACH resources configured at the candidate target cell being activated or deactivated,
receiving, from the base station of the candidate target cell, a response comprising an indication of different one or more additional PRACH resources configured at the candidate target cell being activated,
receiving, from the base station of the candidate target cell, no response at least within a predetermined time period.
obtaining the information about usability from a base station of the candidate target cell, and providing the information about usability to the user equipment,
upon receiving the information about usability from a base station of the candidate target cell, transmitting the information about usability to the user equipment,
transmitting, to the user equipment, a conditional handover configuration for the conditional handover of the user equipment,
receiving, from a base station of the candidate target cell, an indication of the one or more additional PRACH resources configured at the candidate target cell of the conditional handover,
transmitting, to the user equipment, an indication of the one or more additional PRACH resources configured at the candidate target cell of the conditional handover,
identifying the user equipment as a user equipment capable of detecting additional PRACH resources and/or a network energy saving, NES, capable user equipment, and transmitting an indication of the one or more additional PRACH resources configured at the candidate target cell of the conditional handover to the user equipment as a result of identifying the user equipment as a user equipment capable of detecting additional PRACH resources and/or a network energy saving, NES, capable user equipment,
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated.
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a base station of a candidate target cell of a conditional handover of a user equipment, comprising: configuring for a conditional handover of the user equipment from a serving cell of the user equipment to the candidate target cell of the conditional handover, and providing information, for the serving cell, about usability of one or more additional physical random access channel, PRACH, resources, which are configured at the candidate target cell of the conditional handover, for the conditional handover.

According to an example aspect, there is provided a base station (or part, entity, element, chipset, module, etc. thereof) of a candidate target cell of a conditional handover of a user equipment, comprising: at least one processor; and at least one memory storing instructions that, when executed by the at least one processor, cause the user equipment at least to: configure for a conditional handover of the user equipment from a serving cell of the user equipment to the candidate target cell of the conditional handover, and provide information, for the serving cell, about usability of one or more additional physical random access channel, PRACH, resources, which are configured at the candidate target cell of the conditional handover, for the conditional handover.

According to an example aspect, there is provided a base station (or part, entity, element, chipset, module, etc. thereof) of a candidate target cell of a conditional handover of a user equipment, comprising: means for configuring for a conditional handover of the user equipment from a serving cell of the user equipment to the candidate target cell of the conditional handover, and means for providing information, for the serving cell, about usability of one or more additional physical random access channel, PRACH, resources, which are configured at the candidate target cell of the conditional handover, for the conditional handover.

According to an example aspect, there is provided a base station (or part, entity, element thereof) of a candidate target cell of a conditional handover of a user equipment, comprising: circuitry configured to configure for a conditional handover of the user equipment from a serving cell of the user equipment to the candidate target cell of the conditional handover, and circuitry configured to provide information, for the serving cell, about usability of one or more additional physical random access channel, PRACH, resources, which are configured at the candidate target cell of the conditional handover, for the conditional handover.

According to various developments/modifications, any one of the aforementioned method-related and/or apparatus-related example aspects may include one or more of the following features (e.g. corresponding functionalities, operations, processors/instructions, means, circuitry):
the information about usability indicates activation of the one or more additional PRACH resources configured at the candidate target cell,
the information about usability enables determination that one or more additional PRACH resources configured at the candidate target cell are activated or deactivated, wherein any activated additional PRACH resource is usable for the conditional handover,
obtaining an inquiry for the information about usability from a base station of the serving cell of the user equipment, and providing the information about usability to the base station of the serving cell of the user equipment,
receiving, from the base station of the serving cell of the user equipment, a request for informing about activation of the one or more additional PRACH resources configured at the candidate target cell,
transmitting, to the base station of the serving cell of the user equipment, a response comprising an indication of the one or more additional PRACH resources configured at the candidate target cell being activated or deactivated,
transmitting, to the base station of the serving cell of the user equipment, a response comprising an indication of different one or more additional PRACH resources configured at the candidate target cell being activated,
configuring the one or more additional physical random access channel, PRACH, resources,
checking activation of the one or more additional PRACH resources configured at the candidate target cell and/or different one or more additional PRACH resources configured at the candidate target cell,
activating or triggering activation of the one or more additional PRACH resources configured at the candidate target cell upon receiving a request for informing about activation of the one or more additional PRACH resources configured at the candidate target cell from the base station of the serving cell of the user equipment,
activating and/or deactivating the one or more additional PRACH resources configured at the candidate target cell, and provide the information about usability to the base station of the serving cell of the user equipment,
transmitting, to the base station of the serving cell of the user equipment, the information about usability comprising an indication of the one or more additional PRACH resources configured at the candidate target cell being activated or deactivated,
the information about usability is that the one or more additional PRACH resources configured at the candidate target cell are activated or deactivated,
the information about usability is about those one or more additional PRACH resources configured at the candidate target cell, which have been activated and/or deactivated within a predetermined time period,
transmitting the information about usability of the one or more additional PRACH resources configured at the candidate target cell upon activating and/or deactivating the one or more additional PRACH resources configured at the candidate target cell,
transmitting, to the base station of the serving cell, an indication of the one or more additional PRACH resources configured at the candidate target cell,
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a user equipment, comprising: receiving, from a base station of a serving cell of the user equipment, a conditional handover configuration for a conditional handover of the user equipment and an indication of a resource configuration of one or more additional physical random access channel, PRACH, resources at a candidate target cell of the conditional handover, identifying the candidate target cell as a target cell of the conditional handover, and transmitting, to the base station of the serving cell of the user equipment, a request for informing about activation of the one or more additional PRACH resources configured at the candidate target cell.

According to an example aspect, there is provided a user equipment (or part, entity, element, chipset, module, etc. thereof), comprising: at least one processor; and at least one memory storing instructions that, when executed by the at least one processor, cause the user equipment at least to: receive, from a base station of a serving cell of the user equipment, a conditional handover configuration for a conditional handover of the user equipment and an indication of a resource configuration of one or more additional physical random access channel, PRACH, resources at a candidate target cell of the conditional handover, identify the candidate target cell as a target cell of the conditional handover, and transmit, to the base station of the serving cell of the user equipment, a request for informing about activation of the one or more additional PRACH resources configured at the candidate target cell.

According to an example aspect, there is provided a user equipment (or part, entity, element, chipset, module, etc. thereof), comprising: means for receiving, from a base station of a serving cell of the user equipment, a conditional handover configuration for a conditional handover of the user equipment and an indication of a resource configuration of one or more additional physical random access channel, PRACH, resources at a candidate target cell of the conditional handover, means for identifying the candidate target cell as a target cell of the conditional handover, and means for transmitting, to the base station of the serving cell of the user equipment, a request for informing about activation of the one or more additional PRACH resources configured at the candidate target cell.

According to an example aspect, there is provided a user equipment (or part, entity, element thereof), comprising: circuitry configured to receive, from a base station of a serving cell of the user equipment, a conditional handover configuration for a conditional handover of the user equipment and an indication of a resource configuration of one or more additional physical random access channel, PRACH, resources at a candidate target cell of the conditional handover, circuitry configured to identify the candidate target cell as a target cell of the conditional handover, and circuitry configured to transmit, to the base station of the serving cell of the user equipment, a request for informing about activation of the one or more additional PRACH resources configured at the candidate target cell.

According to various developments/modifications, any one of the aforementioned method-related and/or apparatus-related example aspects may include one or more of the following features (e.g. corresponding functionalities, operations, processors/instructions, means, circuitry):
determining, based on a response or absence of a response from the serving cell, activation of the one or more additional PRACH resources configured at the candidate target cell,
receiving, from the base station of the serving cell of the user equipment, a response comprising an indication of the one or more additional PRACH resources configured at the candidate target cell being activated or deactivated, and determining, based on the response, that the one or more additional PRACH resources configured at the candidate target cell are activated or deactivated,
receiving, from the base station of the serving cell of the user equipment, a response comprising an indication of different one or more additional PRACH resources configured at the candidate target cell being activated, and determining, based on the response, that the one or more additional PRACH resources configured at the candidate target cell are deactivated, and the different one or more additional PRACH resources configured at the candidate target cell are activated,
receiving, from the base station of the serving cell of the user equipment, no response at least within a predetermined time period or a response comprising an indication of absence of a response from the candidate target cell, and determining, based on absence of a response or the response, that the one or more additional PRACH resources configured at the candidate target cell are deactivated,
the response is in form of or included in one of a radio resource control, RRC, message, a RRC reconfiguration complete message, a medium access control, MAC, control element, or a physical downlink control channel, PDCCH, command,
the conditional handover configuration and/or the indication of the resource configuration are received as part of radio resource control, RRC, reconfiguration,
the conditional handover configuration and/or the indication of the resource configuration are in form of or included in a radio resource control, RRC, reconfiguration message,
the request is in form of or included in one of a radio resource control, RRC, message, UE assistance information, or a scheduling request,
evaluating fulfillment of one or more conditional handover conditions, and identifying the candidate target cell as the target cell of the conditional handover when the one or more conditional handover conditions are evaluated to be fulfilled for the candidate target cell,
determining, based on a response from the base station of the serving cell, that the one or more additional PRACH resources configured at the candidate target cell are activated and/or different one or more additional PRACH resources configured at the candidate target cell are activated, and initiating execution of the conditional handover from the serving cell to the target cell of the conditional handover using the activated one or more additional PRACH resources configured at the candidate target cell and/or the activated different one or more additional PRACH resources configured at the candidate target cell,
determining, based on a response from the base station of the serving cell or absence of a response from the base station of the serving cell, that the one or more additional PRACH resources configured at the candidate target cell are deactivated, and initiating execution of the conditional handover from the serving cell to the target cell of the conditional handover using one or more legacy PRACH resources configured at the candidate target cell,
determining, based on a response from the base station of the serving cell, that the one or more additional PRACH resources configured at the candidate target cell are activated and/or different one or more additional PRACH resources configured at the candidate target cell are activated, and initiating execution of the conditional handover from the serving cell to the target cell of the conditional handover upon an earliest random access channel, RACH, occasion, wherein the earliest RACH occasion is the activated one or more additional PRACH resources configured at the candidate target cell or one or more legacy configured at the candidate target cell,
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a base station of a serving cell of a user equipment, comprising: transmitting, to the user equipment, a conditional handover configuration for a conditional handover of the user equipment and an indication of a resource configuration of one or more additional physical random access channel, PRACH, resources at a candidate target cell of the conditional handover, receiving, from the user equipment, a request for informing about activation of the one or more additional PRACH resources configured at the candidate target cell, and transmitting, to a base station of the candidate target cell, a request for informing about activation of the one or more additional PRACH resources configured at the candidate target cell.

According to an example aspect, there is provided a base station (or part, entity, element, chipset, module, etc. thereof) of a serving cell of a user equipment, comprising: at least one processor; and at least one memory storing instructions that, when executed by the at least one processor, cause the user equipment at least to: transmit, to the user equipment, a conditional handover configuration for a conditional handover of the user equipment and an indication of a resource configuration of one or more additional physical random access channel, PRACH, resources at a candidate target cell of the conditional handover, receive, from the user equipment, a request for informing about activation of the one or more additional PRACH resources configured at the candidate target cell, and transmit, to a base station of the candidate target cell, a request for informing about activation of the one or more additional PRACH resources configured at the candidate target cell.

According to an example aspect, there is provided a base station (or part, entity, element, chipset, module, etc. thereof) of a serving cell of a user equipment, comprising: means for transmitting, to the user equipment, a conditional handover configuration for a conditional handover of the user equipment and an indication of a resource configuration of one or more additional physical random access channel, PRACH, resources at a candidate target cell of the conditional handover, means for receiving, from the user equipment, a request for informing about activation of the one or more additional PRACH resources configured at the candidate target cell, and means for transmitting, to a base station of the candidate target cell, a request for informing about activation of the one or more additional PRACH resources configured at the candidate target cell.

According to an example aspect, there is provided a base station (or part, entity, element, chipset, module, etc. thereof) of a serving cell of a user equipment, comprising: circuitry configured to transmit, to the user equipment, a conditional handover configuration for a conditional handover of the user equipment and an indication of a resource configuration of one or more additional physical random access channel, PRACH, resources at a candidate target cell of the conditional handover, circuitry configured to receive, from the user equipment, a request for informing about activation of the one or more additional PRACH resources configured at the candidate target cell, and circuitry configured to transmit, to a base station of the candidate target cell, a request for informing about activation of the one or more additional PRACH resources configured at the candidate target cell.

According to various developments/modifications, any one of the aforementioned method-related and/or apparatus-related example aspects may include one or more of the following features (e.g. corresponding functionalities, operations, processors/instructions, means, circuitry):
receiving, from the base station of the candidate target cell, a response comprising an indication of the one or more additional PRACH resources configured at the candidate target cell being activated or deactivated, and transmitting, to the user equipment, a response, corresponding to the received response, the transmitted response comprising an indication of the one or more additional PRACH resources configured at the candidate target cell being activated or deactivated,
receiving, from the base station of the candidate target cell, a response comprising an indication of different one or more additional PRACH resources configured at the candidate target cell being activated, and transmitting, to the user equipment, a response, corresponding to the received response, the transmitted response comprising an indication of different one or more additional PRACH resources configured at the candidate target cell being activated,
receiving, from the base station of the candidate target cell, no response at least within a predetermined time period, and transmitting, to the user equipment, no response or a response comprising an indication of absence of a response from the candidate target cell,
the response transmitted to the user equipment is in form of or included in one of a radio resource control, RRC, message, a RRC reconfiguration complete message, a medium access control, MAC, control element, or a physical downlink control channel, PDCCH, command,
the conditional handover configuration and/or the indication of the resource configuration are transmitted as part of radio resource control, RRC, reconfiguration,
the conditional handover configuration and/or the indication of the resource configuration are in form of or included in a radio resource control, RRC, reconfiguration message,
the request received form the user equipment is in form of or included in one of a radio resource control, RRC, message, UE assistance information, or a scheduling request,
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment, and/or
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
receiving, from the base station of the candidate target cell, an indication of the resource configuration of the one or more additional PRACH resources at the candidate target cell,
identifying the user equipment as a user equipment capable of detecting additional PRACH resources and/or a network energy saving, NES, capable user equipment, and transmitting the indication of the resource configuration to the user equipment as a result of identifying the user equipment as a user equipment capable of detecting additional PRACH resources and/or a network energy saving, NES, capable user equipment,
the user equipment is in radio resource control, RRC, connected mode,
the serving cell of the user equipment is a source cell of the conditional handover.

According to an example aspect, there is provided a method of (or operable) at a base station of a candidate target cell of a conditional handover of a user equipment, comprising: receiving, from a base station of a serving cell of the user equipment, a handover request for the conditional handover of the user equipment, configuring one or more additional physical random access channel, PRACH, resources, receiving, from the base station of the serving cell of the user equipment, a request for informing about activation of the one or more additional PRACH resources configured at the candidate target cell, and transmitting, to the base station of the serving cell of the user equipment, a response comprising an indication of the one or more additional PRACH resources configured at the candidate target cell being activated and/or deactivated or an indication of different one or more additional PRACH resources configured at the candidate target cell being activated.

According to an example aspect, there is provided a base station (or part, entity, element, chipset, module, etc. thereof) of a candidate target cell of a conditional handover of a user equipment, comprising: at least one processor; and at least one memory storing instructions that, when executed by the at least one processor, cause the user equipment at least to: receive, from a base station of a serving cell of the user equipment, a handover request for the conditional handover of the user equipment, configure one or more additional physical random access channel, PRACH, resources, receive, from the base station of the serving cell of the user equipment, a request for informing about activation of the one or more additional PRACH resources configured at the candidate target cell, and transmit, to the base station of the serving cell of the user equipment, a response comprising an indication of the one or more additional PRACH resources configured at the candidate target cell being activated and/or deactivated or an indication of different one or more additional PRACH resources configured at the candidate target cell being activated.

According to an example aspect, there is provided a base station (or part, entity, element, chipset, module, etc. thereof) of a candidate target cell of a conditional handover of a user equipment, comprising: means for receiving, from a base station of a serving cell of the user equipment, a handover request for the conditional handover of the user equipment, means for configuring one or more additional physical random access channel, PRACH, resources, means for receiving, from the base station of the serving cell of the user equipment, a request for informing about activation of the one or more additional PRACH resources configured at the candidate target cell, and means for transmitting, to the base station of the serving cell of the user equipment, a response comprising an indication of the one or more additional PRACH resources configured at the candidate target cell being activated and/or deactivated or an indication of different one or more additional PRACH resources configured at the candidate target cell being activated.

According to an example aspect, there is provided a base station (or part, entity, element, chipset, module, etc. thereof) of a candidate target cell of a conditional handover of a user equipment, comprising: circuitry configured to receive, from a base station of a serving cell of the user equipment, a handover request for the conditional handover of the user equipment, circuitry configured to configure one or more additional physical random access channel, PRACH, resources, circuitry configured to receive, from the base station of the serving cell of the user equipment, a request for informing about activation of the one or more additional PRACH resources configured at the candidate target cell, and circuitry configured to transmit, to the base station of the serving cell of the user equipment, a response comprising an indication of the one or more additional PRACH resources configured at the candidate target cell being activated and/or deactivated or an indication of different one or more additional PRACH resources configured at the candidate target cell being activated.

According to various developments/modifications, any one of the aforementioned method-related and/or apparatus-related example aspects may include one or more of the following features (e.g. corresponding functionalities, operations, processors/instructions, means, circuitry):
transmitting, to the base station of the serving cell, an indication of a resource configuration of the one or more additional PRACH resources configured at the candidate target cell,
checking activation of the one or more additional PRACH resources configured at the candidate target cell and/or different one or more additional PRACH resources configured at the candidate target cell,
activating or triggering activation of the one or more additional PRACH resources configured at the candidate target cell upon receiving the request from the base station of the serving cell of the user equipment,
connecting with the user equipment during execution of the conditional handover from the serving cell to the candidate target cell of the conditional handover using activated one or more additional PRACH resources configured at the candidate target cell or one or more legacy configured at the candidate target cell,
receiving, from the user equipment, PRACH communication upon an earliest random access channel, RACH, occasion based on activated one or more additional PRACH resources configured at the candidate target cell or one or more legacy configured at the candidate target cell,
the one or more additional PRACH resources comprise PRACH resources being configured at the candidate target cell of the conditional handover as a result of PRACH adaptation and/or in response to the handover request for the conditional handover,
the one or more additional PRACH resources comprise PRACH resources being configured for a user equipment capable of detecting additional PRACH resources and/or a network energy saving, NES, capable user equipment, and/or
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a user equipment, comprising: receiving, from a base station of a serving cell of the user equipment, a conditional handover configuration for a conditional handover of the user equipment, wherein the conditional handover configuration indicates a candidate target cell of the conditional handover, and receiving, from the base station of the serving cell of the user equipment, information about activation of one or more additional physical random access channel, PRACH, resources configured at the candidate target cell.

According to an example aspect, there is provided a user equipment (or part, entity, element, chipset, module, etc. thereof), comprising: at least one processor; and at least one memory storing instructions that, when executed by the at least one processor, cause the user equipment at least to: receive, from a base station of a serving cell of the user equipment, a conditional handover configuration for a conditional handover of the user equipment, wherein the conditional handover configuration indicates a candidate target cell of the conditional handover, and receive, from the base station of the serving cell of the user equipment, information about activation of one or more additional physical random access channel, PRACH, resources configured at the candidate target cell.

According to an example aspect, there is provided a user equipment (or part, entity, element, chipset, module, etc. thereof), comprising: means for receiving, from a base station of a serving cell of the user equipment, a conditional handover configuration for a conditional handover of the user equipment, wherein the conditional handover configuration indicates a candidate target cell of the conditional handover, and means for receiving, from the base station of the serving cell of the user equipment, information about activation of one or more additional physical random access channel, PRACH, resources configured at the candidate target cell.

According to an example aspect, there is provided a user equipment (or part, entity, element thereof), comprising: circuitry configured to receive, from a base station of a serving cell of the user equipment, a conditional handover configuration for a conditional handover of the user equipment, wherein the conditional handover configuration indicates a candidate target cell of the conditional handover, and circuitry configured to receive, from the base station of the serving cell of the user equipment, information about activation of one or more additional physical random access channel, PRACH, resources configured at the candidate target cell.

According to various developments/modifications, any one of the aforementioned method-related and/or apparatus-related example aspects may include one or more of the following features (e.g. corresponding functionalities, operations, processors/instructions, means, circuitry):
determining, based on the information about activation, activation of the one or more additional PRACH resources configured at the candidate target cell,
determining, based on the information about activation, that the one or more additional PRACH resources configured at the candidate target cell are activated or deactivated,
the information about activation in form of or included in legacy downlink control information, paging downlink control information, or specific downlink control information dedicated for PRACH adaptation and/or additional PRACH resources,
the information about activation is received combined or related with information about activation of one or more additional PRACH resources configured at the serving cell of the user equipment,
receiving, from the base station of the serving cell of the user equipment, an indication of a resource configuration of the one or more additional PRACH resources at the candidate target cell of the conditional handover,
the conditional handover configuration and/or the indication of the resource configuration are received as part of radio resource control, RRC, reconfiguration,
the conditional handover configuration and/or the indication of the resource configuration are in form of or included in a radio resource control, RRC, reconfiguration message,
evaluating fulfillment of one or more conditional handover conditions, and identify the candidate target cell as the target cell of the conditional handover when the one or more conditional handover conditions are evaluated to be fulfilled for the candidate target cell,
determining, based on the information about activation, that the one or more additional PRACH resources configured at the candidate target cell are activated and/or different one or more additional PRACH resources configured at the candidate target cell are activated, and initiating execution of the conditional handover from the serving cell to the target cell of the conditional handover using the activated one or more additional PRACH resources configured at the candidate target cell,
determining, based on the information about activation, that the one or more additional PRACH resources configured at the candidate target cell are deactivated, and initiating execution of the conditional handover from the serving cell to the target cell of the conditional handover using one or more legacy PRACH resources configured at the candidate target cell,
determining, based on the information about activation, that the one or more additional PRACH resources configured at the candidate target cell are activated and/or different one or more additional PRACH resources configured at the candidate target cell are activated, and initiating execution of the conditional handover from the serving cell to the target cell of the conditional handover upon an earliest random access channel, RACH, occasion, wherein the earliest RACH occasion is the activated one or more additional PRACH resources configured at the candidate target cell or one or more P legacy RACH resources configured at the candidate target cell.
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated.
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

According to an example aspect, there is provided a method for or (operable) at a base station of a serving cell of a user equipment, comprising: transmitting, to the user equipment, a conditional handover configuration for a conditional handover of the user equipment, wherein the conditional handover configuration indicates a candidate target cell of the conditional handover, receiving, from the base station of the candidate target cell, information about activation of one or more additional physical random access channel, PRACH, resources configured at the candidate target cell, and transmitting, to the user equipment, information about the activation of the one or more additional PRACH resources configured at the candidate target cell.

According to an example aspect, there is provided a base station (or part, entity, element, chipset, module, etc. thereof) of a serving cell of a user equipment, comprising: at least one processor; and at least one memory storing instructions that, when executed by the at least one processor, cause the user equipment at least to: transmit, to the user equipment, a conditional handover configuration for a conditional handover of the user equipment, wherein the conditional handover configuration indicates a candidate target cell of the conditional handover, receive, from the base station of the candidate target cell, information about activation of one or more additional physical random access channel, PRACH, resources configured at the candidate target cell, and transmit, to the user equipment, information about the activation of the one or more additional PRACH resources configured at the candidate target cell.

According to an example aspect, there is provided a base station (or part, entity, element, chipset, module, etc. thereof) of a serving cell of a user equipment, comprising: means for transmitting, to the user equipment, a conditional handover configuration for a conditional handover of the user equipment, wherein the conditional handover configuration indicates a candidate target cell of the conditional handover, means for receiving, from the base station of the candidate target cell, information about activation of one or more additional physical random access channel, PRACH, resources configured at the candidate target cell, and means for transmitting, to the user equipment, information about the activation of the one or more additional PRACH resources configured at the candidate target cell.

According to an example aspect, there is provided a base station (or part, entity, element, chipset, module, etc. thereof) of a serving cell of a user equipment, comprising: circuitry configured to transmit, to the user equipment, a conditional handover configuration for a conditional handover of the user equipment, wherein the conditional handover configuration indicates a candidate target cell of the conditional handover, circuitry configured to receive, from the base station of the candidate target cell, information about activation of one or more additional physical random access channel, PRACH, resources configured at the candidate target cell, and circuitry configured to transmit, to the user equipment, information about the activation of the one or more additional PRACH resources configured at the candidate target cell.

According to various developments/modifications, any one of the aforementioned method-related and/or apparatus-related example aspects may include one or more of the following features (e.g. corresponding functionalities, operations, processors/instructions, means, circuitry):
the information about activation is that the one or more additional PRACH resources configured at the candidate target cell are activated or deactivated,
the information about activation is in form of or included in one or more of legacy downlink control information, paging downlink control information, or specific downlink control information dedicated for PRACH adaptation and/or additional PRACH resources,
the information about activation is transmitted combined or related with information about activation of one or more additional PRACH resources configured at the serving cell of the user equipment,
transmitting, to the user equipment, an indication of a resource configuration of the one or more additional PRACH resources at the candidate target cell of the conditional handover,
the conditional handover configuration and/or the indication of the resource configuration are transmitted as part of radio resource control, RRC, reconfiguration,
the conditional handover configuration and/or the indication of the resource configuration are in form of or included in a radio resource control, RRC, reconfiguration message,
the one or more additional PRACH resources comprise PRACH resources being configured at the candidate target cell of the conditional handover as a result of PRACH adaptation and/or in response to a handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated,
the user equipment is capable of detecting additional PRACH resources, and/or
the user equipment is a network energy saving, NES, capable user equipment.
receiving, from the base station of the candidate target cell, an indication of a resource configuration of the one or more additional PRACH resources at the candidate target cell,
identifying the user equipment as a user equipment capable of detecting additional PRACH resources and/or a network energy saving, NES, capable user equipment, and transmitting the indication of the resource configuration to the user equipment as a result of identifying the user equipment as a user equipment capable of detecting additional PRACH resources and/or a network energy saving, NES, capable user equipment.
the user equipment is in radio resource control, RRC, connected mode,
the serving cell of the user equipment is a source cell of the conditional handover.

According to an example aspect, there is provided a method for or (operable) at a base station of a candidate target cell of a conditional handover of a user equipment, comprising: receiving, from a base station of a serving cell of the user equipment, a handover request for the conditional handover of the user equipment, configuring one or more additional physical random access channel, PRACH, resources, activating and/or deactivating the one or more additional PRACH resources configured at the candidate target cell, and transmitting, to the base station of the serving cell of the user equipment, information about activation of the one or more additional PRACH resources configured at the candidate target cell.

According to an example aspect, there is provided a base station (or part, entity, element, chipset, module, etc. thereof) of a candidate target cell of a conditional handover of a user equipment, comprising: at least one processor; and at least one memory storing instructions that, when executed by the at least one processor, cause the user equipment at least to: receive, from a base station of a serving cell of the user equipment, a handover request for the conditional handover of the user equipment, configure one or more additional physical random access channel, PRACH, resources, activate and/or deactivate the one or more additional PRACH resources configured at the candidate target cell, and transmit, to the base station of the serving cell of the user equipment, information about activation of the one or more additional PRACH resources configured at the candidate target cell.

According to an example aspect, there is provided a base station (or part, entity, element, chipset, module, etc. thereof) of a candidate target cell of a conditional handover of a user equipment, comprising: means for receiving, from a base station of a serving cell of the user equipment, a handover request for the conditional handover of the user equipment, means for configuring one or more additional physical random access channel, PRACH, resources, means for activating and/or deactivating the one or more additional PRACH resources configured at the candidate target cell, and means for transmitting, to the base station of the serving cell of the user equipment, information about activation of the one or more additional PRACH resources configured at the candidate target cell.

According to an example aspect, there is provided a base station (or part, entity, element, chipset, module, etc. thereof) of a candidate target cell of a conditional handover of a user equipment, comprising: circuitry configured to receive, from a base station of a serving cell of the user equipment, a handover request for the conditional handover of the user equipment, circuitry configured to configure one or more additional physical random access channel, PRACH, resources, circuitry configured to activate and/or deactivate the one or more additional PRACH resources configured at the candidate target cell, and circuitry configured to transmit, to the base station of the serving cell of the user equipment, information about activation of the one or more additional PRACH resources configured at the candidate target cell.

According to various developments/modifications, any one of the aforementioned method-related and/or apparatus-related example aspects may include one or more of the following features (e.g. corresponding functionalities, operations, processors/instructions, means, circuitry):
the information about activation is that the one or more additional PRACH resources configured at the candidate target cell are activated or deactivated,
the information about activation is about those one or more additional PRACH resources configured at the candidate target cell, which have been activated and/or deactivated within a predetermined time period,
transmitting the information about activation of the one or more additional PRACH resources configured at the candidate target cell upon activating and/or deactivating the one or more additional PRACH resources configured at the candidate target cell,
transmitting, to the base station of the serving cell of the user equipment, an indication of a resource configuration of the one or more additional PRACH resources configured at the candidate target cell,
connecting with the user equipment during execution of the conditional handover from the serving cell to the candidate target cell of the conditional handover using activated one or more additional PRACH resources configured at the candidate target cell or legacy one or more PRACH resources configured at the candidate target cell,
receiving, from the user equipment, PRACH communication upon an earliest random access channel, RACH, occasion based on activated one or more additional PRACH resources configured at the candidate target cell or legacy one or more PRACH resources configured at the candidate target cell,
the one or more additional PRACH resources comprise PRACH resources being configured at the candidate target cell of the conditional handover as a result of PRACH adaptation and/or in response to the handover request for the conditional handover,
the one or more additional PRACH resources comprise PRACH resources being configured for a user equipment capable of detecting additional PRACH resources and/or a network energy saving, NES, capable user equipment,
the one or more additional PRACH resources comprise PRACH resources being semi-statically configured and being able to be dynamically activated or deactivated,
the user equipment is capable of detecting additional PRACH resources,
the user equipment is a network energy saving, NES, capable user equipment,
the user equipment is in radio resource control, RRC, connected mode,
the serving cell of the user equipment is a source cell of the conditional handover.

As indicated above, any one of the aforementioned apparatuses is adapted, configured or operable to perform or carry out the respective functionalities or operations. Any one of the aforementioned apparatuses may be constructed, embodied or realized in various ways. For example, the apparatus may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like.

According to an example aspect, there is provided a system comprising at least two of the apparatuses according to any one of the aforementioned apparatus-related example aspects (and/or any development/modification thereof).

According to an example aspect, there is provided a computer-readable medium comprising program instructions for causing an apparatus (e.g. an apparatus according to any one of the aforementioned apparatus-related example aspects (and/or any development/modification thereof) to perform at least a method according to any one of the aforementioned method-related example aspects (and/or any development/modification thereof).

According to an example aspect, there is provided a computer program product comprising (computer-executable) computer program code which, when the program code is executed (or run) on a computer or the program is run on a computer (e.g. a computer of an apparatus according to any one of the aforementioned apparatus-related example aspects (and/or any development/modification thereof), is configured to cause the computer to carry out at least a method according to any one of the aforementioned method-related example aspects (and/or any development/modification thereof).

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

The term "non-transitory," as used herein, is a limitation of the medium itself (referring to e.g. a tangible medium, not a signal) as opposed to a limitation on data storage persistency (e.g. RAM vs. ROM).

Further developments and/or modifications of the aforementioned example aspects are set out in the following.

By way of example embodiments, technique(s) for (e.g. enabling or otherwise facilitating or realizing) conditional handover with PRACH adaptation (or, stated differently, additional PRACH resources) may be provided.

This summary is intended to provide a brief overview of some of the aspects (and features thereof) according to the various example embodiments of the disclosure. Accordingly, it will be appreciated that the above-described aspects (and features thereof) are merely examples and should not be construed to narrow the scope of the various example embodiments or disclosure in any way. Other features, aspects, effects and/or purposes of the disclosure will become apparent from the following detailed description, drawings and claims.

### BRIEF DESCRIPTION OF THE DRAWINGS

In the following, various example embodiments will be described with reference to the accompanying drawings, in which
FIG. 1 shows a schematic diagram of an example (mobile/wireless) communication system or network;
FIG. 2 shows a schematic diagram of an example wireless device or entity;
FIG. 3 shows a schematic diagram of an example network node or entity;
FIG. 4 shows an example conditional handover procedure;
FIG. 5 shows an example intra-AMF/UPF conditional handover procedure;
FIG. 6 shows an example PRACH adaptation scenario based on a different PRACH configuration index;
FIG. 7 shows an example PRACH adaptation scenario based on the same PRACH configuration index;
FIGs. 8 to 10 show flowcharts of a first example of methods or processes;
FIG. 11 shows a second example of a conditional handover procedure with PRACH adaptation;
FIG. 12 shows a second example of an intra-AMF/UPF conditional handover procedure with PRACH adaptation;
FIGs. 13 to 15 show flowcharts of a second example of methods or processes;
FIG. 16 shows a third example of a conditional handover procedure with PRACH adaptation;
FIG. 17 shows a third example of a conditional handover procedure with PRACH adaptation;
FIG. 18 shows a third example of an intra-AMFIUPF conditional handover procedure with PRACH adaptation;
FIGs. 19 to 21 show flowcharts of a third example of methods or processes;

### DETAILED DESCRIPTION

Various example embodiments are herein described with reference to particular non-limiting and illustrative examples. A person skilled in the art will appreciate that these various example embodiments are by no means limited to these non-limiting and illustrative examples, and may be more broadly applied.

References in the specification to "one embodiment," "an embodiment," "an example embodiment," "some example embodiments," "certain example embodiments," "various example embodiments," and so forth, indicate that the referenced embodiment(s) may include particular feature(s), structure(s), or characteristic(s), but every referenced embodiment or example embodiment may not necessarily include the particular feature(s), structure(s), or characteristic(s). Moreover, such phrases are not necessarily referring to the same embodiment or example embodiment. Further, when particular feature(s), structure(s), or characteristic(s) are described in connection with an embodiment or an example embodiment, it is submitted that it is within the knowledge of one skilled in the art to implement such feature, structure, or characteristic in connection with any other embodiments or example embodiments whether or not such combination(s) are explicitly described.

It is to be noted that the detailed description, at times, refers to one or more specifications being used as non-limiting and illustrative examples for certain architectures, network configurations and system deployments. More specifically, the detailed description makes reference to 3GPP standards, being used as non-limiting and illustrative examples. As such, the example embodiments provided herein can specifically employ terminology which is directly related thereto. Such terminology is only used in the context of the non-limiting and illustrative examples, and is not intended to limit the example embodiments in any way. Rather, any other system configuration or deployment may be utilized while complying with what is described herein and/or example embodiments are applicable to it.

For example, various example embodiments are applicable in any (e.g., mobile/wireless) communication system, such as a 5G/NR system and a next-generation/future system beyond 5G. For example, various example embodiments are applicable in a 3GPP-standardized mobile/wireless communication system of 3GPP Release 19 onwards. Furthermore, even though reference to 5G/NR is made, other types of access/system/network are supported/covered as well, such as future 3GPP radio/6G but also non-3GPP access to 3GPP Core (such as e.g. Untrusted non-3GPP access to 3GPP core using e.g. N3IWF, Trusted non-3GPP access to 3GPP core using e.g. TNGF, wireline access to 3GPP core using e.g. W-AGF), or the like.

When reference is made to particular terminology specific for any such example system, these references are to be understood/construed to be more generally applicable in a corresponding, similar or equivalent meaning. More specifically, when reference is made to some network function, entity or element of a 5G/NR or 3GPP system, it shall be understood/construed that any network function, entity or element of any system is meant or encompassed, which has or exhibits a corresponding, similar or equivalent characteristic, functionality, purpose or the like. As an illustrative but non-exhaustive example, a reference to a base station or a base station shall mean or encompass any network function, entity or element of any communication network, which has or exhibits a characteristic, functionality, purpose or the like, which is corresponding, similar or equivalent to that of the referenced base station or base station. For example, a base station or base station may be any network function, entity or element which is configured to control/provide or capable of controlling/providing access to or for a corresponding cell.

Hereinafter, various example embodiments are described using several variants and/or alternatives. It is generally to be noted that, according to certain implementations or constraints, all of the described variants and/or alternatives may be provided alone or in any conceivable combination (e.g. also including combinations of individual features of these various variants and/or alternatives).

As used herein, the words "comprising" and "including" should be understood as not limiting the example embodiments to consist of only those features that have been mentioned, and example embodiments may also contain, among other things, e.g. features, structures, units, modules, or the like, that have not been specifically mentioned.

As used herein, "at least one of the following: <a list of two or more elements>" and "at least one of <a list of two or more elements>" and similar expressions, like "one or more of", where the list of two or more elements are joined by "and" or "or", mean at least any one of the elements, or at least any two or more of the elements, or at least all the elements. As used herein, the expression "and/or" mean at least any one of the elements, or at least any two or more of the elements, or at least all of the elements.

As used herein, unless to explicitly stated to the contrary, performing a step/operation/functionality "in response to A" does not indicate that the step/operation/functionality is performed immediately after "A" occurs as one or more intervening steps/operations/functionalities may be included therebetween. Analogously, performing a step/operation/functionality "based on A" does not indicate that the step/operation/functionality is performed solely based on "A", as the referenced step/operation/functionality may be further based on one or more other conditions (such as "B") in addition to "A".

As used herein, according to various example embodiments, any operations of sending or receiving may comprise actual transmission or communication operations, e.g. transmitting or communicating associated information, data, signals or messages, but may additionally or alternatively comprise related processing operations, e.g. preparing/generating/issuing associated information, data, signals or messages before sending and/or obtaining/handling/processing of associated information, data, signals or messages after receiving. For example, sending an information or data at/by a node may comprise generating/issuing and/or transmitting/communicating thereof or a corresponding signal or message in/at/by the node, and receiving a signal or message at/by a node may comprise obtaining/handling and/or processing thereof or a corresponding information or data in/at/by the node. As used herein, a signal or message may refer to and/or encompass any kind of corresponding information, data, signal or the like.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of functionalities, operations or actions is generally non-limiting and illustrative, and any other order of respective functionalities, operations or actions is conceivable, if feasible.

Various example embodiments relate to considerations in a (e.g. mobile/wireless) communication system or network, such as a 5G/NR system and a next-generation/future system beyond 5G. For example, various example embodiments are applicable in a 3GPP-standardized mobile/wireless communication system or network of 3GPP Release 19 onwards. Such considerations relate to conditional handover of/for a user equipment, specifically (but not exclusively) in connection with PRACH adaptation (or, stated differently, additional PRACH resources).

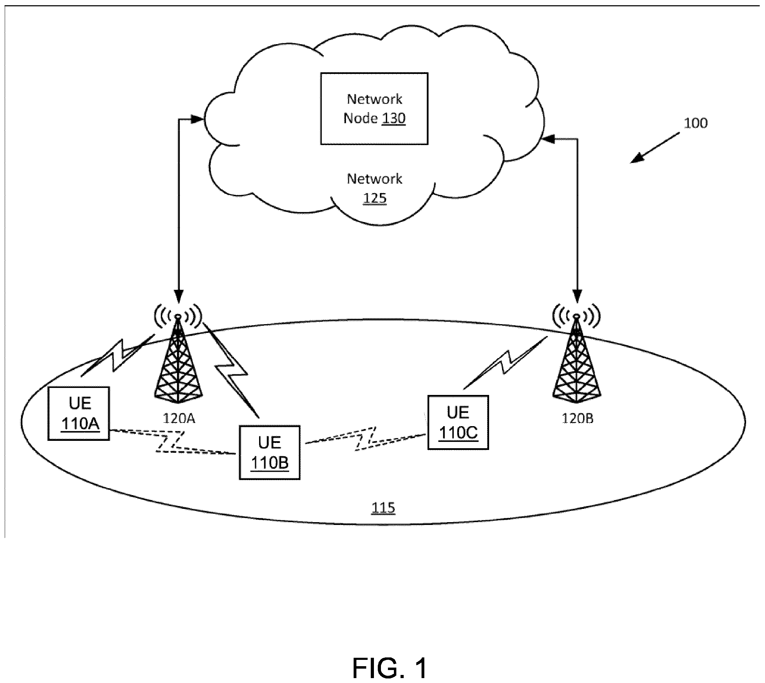

Before explaining example embodiments in further detail, certain general aspects of a (mobile/wireless) communication system or network are briefly explained with reference to FIGS. 1 to 3 to assist in understanding the technology underlying the described example embodiments.

FIG. 1 illustrates an example of a (mobile/wireless) communication system or network 100 that may be used for wireless communications. The communication system or network 100 includes wireless devices or entities, such as UEs 110 (e.g., 110A-110C), and network nodes or entities, such as radio access nodes 120 (e.g., 120A-120B) (e.g., eNBs, gNBs, and so forth), connected to one or more network nodes or entities 130 via an interconnecting network 125. The communication system or network 100 may use any suitable deployment scenarios. UEs 110 within coverage area 115 may each be capable of communicating directly with radio access nodes 120 over a wireless interface. In some example embodiments, UEs 110 may also be capable of communicating with each other via device-to-device (D2D) communication.

As an example, UE 110A may communicate with radio access node 120A over a wireless interface. That is, UE 110A may transmit wireless signals to and/or receive wireless signals from radio access node 120A. The wireless signals may contain voice traffic, data traffic, control signals, and/or any other suitable information.

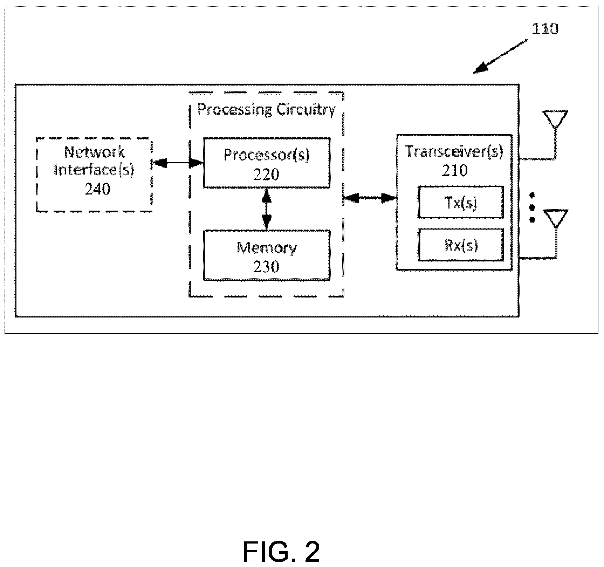

As used herein, the term "user equipment" (UE) has the full breadth of its ordinary meaning and may refer to any type of wireless device or entity which can communicate with a network node or entity and/or with another UE in a cellular or mobile or wireless/mobile communication system. Examples of UEs are target device, D2D UE, machine type UE or UE capable of machine-to-machine (M2M) communication, personal digital assistant, tablet, mobile terminal, smartphone, laptop embedded equipped (LEE), laptop mounted equipment (LME), USB dongles, ProSe UE, vehicle-to-vehicle (V2V) UE, V2X UE, machine-type-communication (MTC) UE, eMTC UE, FeMTC UE, UE Cat 0, UE Cat Ml, narrow band IoT (NB-Internet-of Things) UE, UE Cat NB1, and so forth. Example embodiments of a UE are described in more detail below with respect to FIG. 2.

In some example embodiments, an area of wireless signal coverage 115 associated with a radio access node 120 may be referred to as a cell. However, particularly with respect to the fifth generation (5G) / New Radio (NR) mobile communication concepts, beams may be used instead of cells and, as such, it is important to note that concepts described herein are equally applicable to both cells and beams.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, and so forth, or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network, such as the Internet, a wireline or wireless network, an enterprise intranet, or any other suitable communication link, including combinations thereof.

In some example embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, MDT node, and so forth. UEs 110 may exchange certain signals with the network node 130 using the non-access stratum (NAS) layer. In non-access stratum signaling, signals between UEs 110 and the network node 130 may be transparently passed through the radio access network. In some example embodiments, radio access nodes 120 may interface with one or more network nodes 130 over an internode interface.

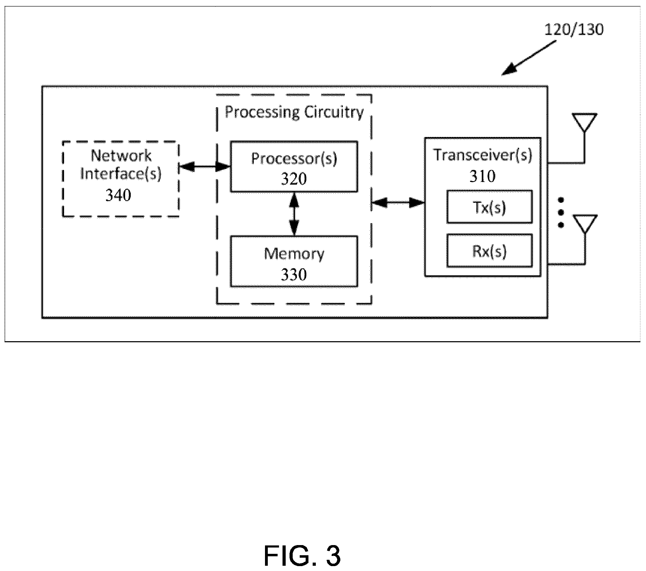

As used herein, the term "network node or entity" has the full breadth of its ordinary meaning and may correspond to any type of radio access node (or radio network node) or any network node, which can communicate with a UE and/or with another network node in a cellular or mobile or wireless communication system. Examples of network nodes are NodeB, MeNB, SeNB, a network node may belong to master cell group (MCG) or secondary cell group (SCG), base station (BS), multi-standard radio (MSR) radio access node, such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, and so forth), O&M, OSS, Self-organizing Network (SON), positioning node (e.g., E-SMLC), MDT, test equipment, and so forth. Example embodiments of a network node are described in more detail below with respect to FIG. 3.

In some example embodiments, radio access node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the implemented architecture.

Example wireless communication systems are architectures standardized by the 3rd Generation Partnership Project (3GPP). A 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features, such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies, such as WLAN and/or Worldwide Interoperability for Microwave Access (WiMax). A base station can provide coverage for an entire cell or similar radio service area. Core network elements include Mobility Management Entity (MME), Serving Gateway (S-GW) and Packet Gateway (P-GW).

An example of a suitable communications system is the 5G/6G or NR concept. Network architecture in NR may be similar to that of LTE-A. Base stations of NR systems may be known as next generation Node Bs (gNBs). Changes to the network architecture may depend on the support for various radio technologies and finer Quality of Service (QoS), and some on-demand requirements for QoS levels to support Quality of Experience (QoE) of user point of view. Also network aware services and applications, and service and application aware networks may bring changes to the network architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for enhanced (e.g., better, increased, and so forth) coverage and data rates.

Future networks may utilize network functions virtualization (NFV), which is a network architecture concept that proposes virtualizing network node functions into "building blocks" or entities that may be operationally connected or linked together to provide services. A virtualized network function (VNF) may comprise one or more virtual machines running computer program code using standard or general type servers instead of customized hardware. Cloud computing or data storage may also be utilized. In radio communications, this may mean node operations are to be carried out, at least partly, in a server, host or node operationally coupled to a remote radio head. It is also possible that node operations will be distributed among a plurality of servers, nodes, or hosts. It should also be understood that the distribution of labor between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G network towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an example wireless device, UE 110, according to certain example embodiments. UE 110 may include one or more of at least one transceiver 210, at least one processor 220, at least one memory 230, and at least one network interface 240. In certain example embodiments, the transceiver 210 facilitates transmitting wireless signals to and receiving wireless signals from radio access node 120 (e.g., via transmitter(s) (Tx), receiver(s) (Rx) and antenna(s)). The processor(s) 220 execute instructions to provide some or all of the functionalities described herein as being provided by a wireless device/entity or UE, and the memory 230 stores the instructions executed by the processor(s) 220. In some embodiments, the processor(s) 220 and the memory 230 form processing circuitry.

The processor(s) 220 may include any suitable combination of hardware to execute instructions and manipulate data to perform some or all of the described functions of a wireless device or entity, such as the functions of UE 110 described herein. In some embodiments, the processor(s) 220 may include, for example, one or more computers, one or more central processing units (CPUs), one or more microprocessors, one or more application specific integrated circuits (ASICs), one or more field programmable gate arrays (FPGAs) and/or other logic.

The memory 230 is generally operable to store instructions, such as a computer program, software, an application including one or more of logic, rules, algorithms, code, tables, and so forth and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to any corresponding methods (or portions thereof) described herein.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, and so forth) and software, including protocol conversion and data processing capabilities, to communicate through a network.

Other example embodiments of UE 110 may include additional components beyond those shown in FIG. 2 that may be responsible for providing certain aspects of the wireless device's functionalities, including any of the functionalities described herein and/or any additional functionalities (including any functionality to support the mechanisms according to the disclosure). As an example, UE 110 may include input devices and circuits, output devices, and one or more synchronization units or circuits, which may be part of the processor(s) 220. Input devices include mechanisms for entry of data into UE 110. For example, input devices may include input mechanisms, such as a microphone, input elements, a display, and so forth. Output devices may include mechanisms for outputting data in audio, video and/or hard copy format. For example, output devices may include a speaker, a display, and so forth.

In certain example embodiments, the wireless device UE 110 may comprise a series of modules configured to implement the functionalities of the wireless device described herein.

It will be appreciated that the various modules may be implemented as combination of hardware and software, for instance, the processor, memory, and transceiver(s) of UE 110 shown in FIG. 2. Certain example embodiments may also include additional modules to support additional and/or optional functionalities.

FIG. 3 is a schematic diagram of an example radio access node 120 or network node or entity 130, such as a base station or base station, according to certain example embodiments. Radio access node 120 or network node or entity 130 may include one or more of at least one transceiver 310, at least one processor 320, at least one memory 330, and at least one network interface 340. In certain example embodiments, the transceiver(s) 310 facilitate transmitting wireless signals to and receiving wireless signals from wireless devices, such as UE 110 (e.g., via transmitter(s) (Tx), receiver(s) (Rx), and antenna(s)). The processor(s) 320 execute instructions to provide some or all of the functionalities described herein as being provided by the radio access node 120 or the network node or entity 130, the memory 330 stores the instructions executed by the processor 320. In some example embodiments, the processor(s) 320 and the memory 330 form processing circuitry. The network interface(s) 340 can communicate signals to backend network components, such as a gateway, switch, router, Internet, Public Switched Telephone Network (PSTN), core network nodes or radio network controllers, and so forth.

The processor 320 can include any suitable combination of hardware to execute instructions and manipulate data to perform some or all of the described functions of the radio access node 120 or the network node or entity 130, such as those described herein. In some example embodiments, the processor(s) 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, and so forth and/or other instructions capable of being executed by the processor(s) 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to any corresponding methods (or portions thereof) described herein.

In certain example embodiments, the network interface(s) 340 are communicatively coupled to the processor(s) 320 and may refer to any suitable device operable to receive input for the radio access node 120 or the network node or entity 130, send output from the radio access node 120 or the network node or entity 130, perform suitable processing of the input or output or both, communicate to other devices, or any combination of the preceding. The network interface 340 may include appropriate hardware (e.g., port, modem, network interface card, and so forth) and software, including protocol conversion and data processing capabilities, to communicate through a network.

Other example embodiments of the radio access node 120 or the network node or entity 130 can include additional components beyond those shown in FIG. 3 that may be responsible for providing certain aspects of the node's functionalities, including any of the functionalities described herein and/or any additional functionalities (including any functionality to support the solutions described herein). The various different types of radio access nodes or network nodes may include components having the same physical hardware but configured (e.g., via programming) to support different radio access technologies, or may represent partly or entirely different physical components.

Processors, interfaces, and memory similar to those described with respect to FIG. 3 may be included in other nodes or entities (such as UE 110, radio access node 120, and so forth). Other nodes or entities may optionally include or not include a wireless interface (such as the transceiver(s) described in FIG. 3).

In certain example embodiments, the radio access node 120 or the network node or entity 130 may comprise a series of modules configured to implement the functionalities of the radio access node 120 or the network node or entity 130 described herein.

It will be appreciated that the various modules may be implemented as combination of hardware and software, for instance, the processor(s), memory, and transceiver(s) of the radio access node 120 or the network node or entity 130 shown in FIG. 3. Certain example embodiments may also include additional modules to support additional and/or optional functionalities.

It should be noted that all concepts described herein, although described in a specific manner or context, may be more generally applicable, e.g. in another specific manner or context, as will be apparent to the skilled person.

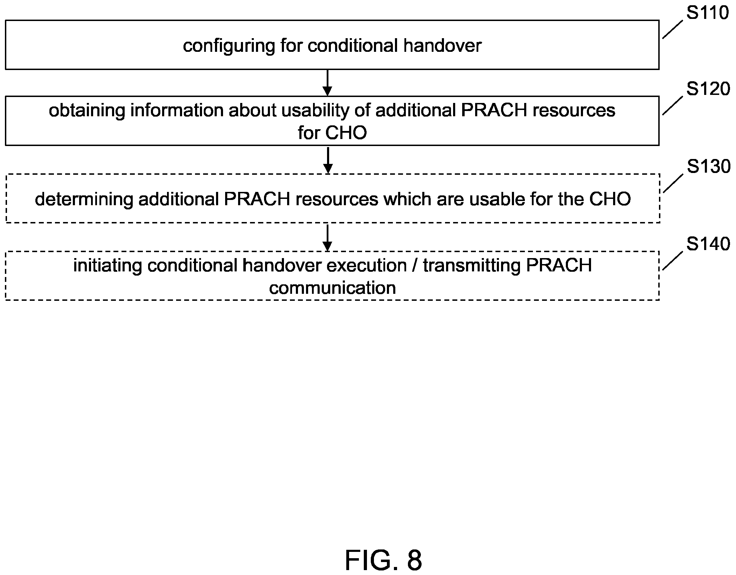

Before referring to FIGs. 8 to 21 and describing specifics of technique(s) for (e.g. enabling/facilitating/realizing) conditional handover of/for a UE with PRACH adaptation (or, stated differently, additional PRACH resources), some additional information and aspects related to certain example embodiments will be provided.

A Conditional Handover (CHO) is defined as a handover that is executed by the UE when one or more handover execution conditions are met. The UE starts evaluating the handover condition(s) upon receiving a CHO configuration (in which e.g. the (list of) candidate target cells and the handover conditions are defined or indicated), and the UE stops evaluating the handover condition(s) once a handover is executed. Thereby, the UE can decide to perform handover, in contrast to legacy handover where the network is in charge of making the decision whether the handover should be performed or not based on measurement report(s) received from the UE. For CHO, a set of candidate target nodes (such as e.g. radio access node 120 in the system/network of FIG. 1) and/or candidate target cells (such as e.g. coverage area 115 in the system/network of FIG. 1) are prepared, i.e. resources at a set of candidate target nodes and/or cells are configured/reserved, thus enabling UE-initiated handover without network involvement.

In CHO 3GPP Release 16, a UE is configured with a CHO command containing the serving cell configuration and a condition to execute the handover for one or multiple prepared candidate target cells. The condition is based on radio measurements of the neighboring cells. CHO is designed so that the UE can do the handover autonomously without the need for the serving cell to trigger the handover execution e.g., after receiving the measurement report(s) from the UE.

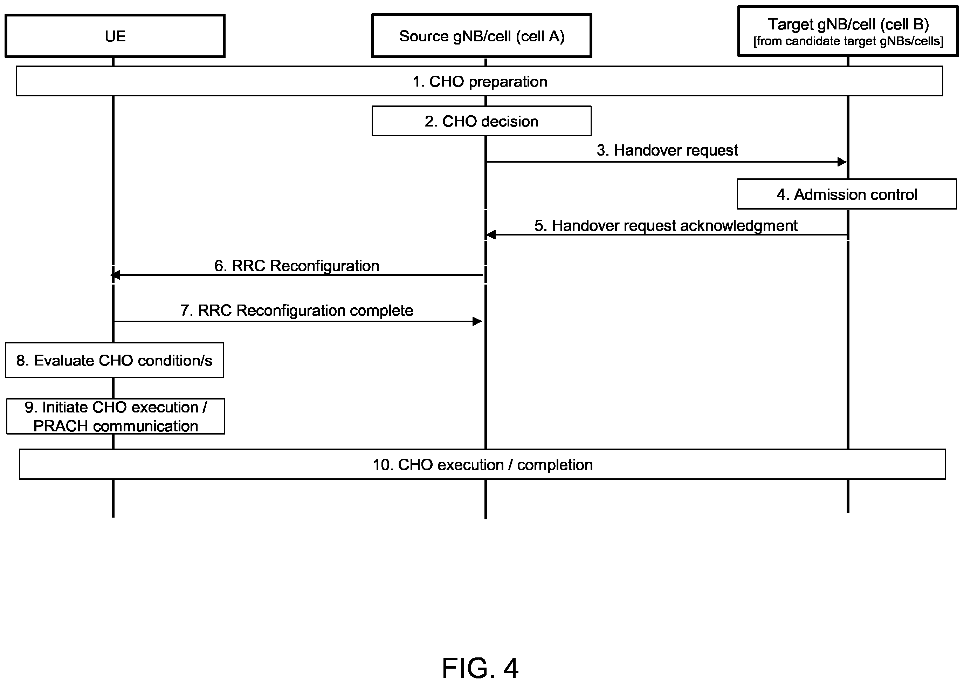

FIG. 4 shows an example conditional handover procedure. Upon CHO preparation between the UE (which is in RRC connected mode), the source gNB/cell and the prepared candidate target gNBs/cells (step 1), the source gNB/cell makes the CHO decision (step 2). Thereupon, the source gNB/cell and the candidate target gNBs/cells cooperate so as to configure/reserve resources for CHO (steps 3-5), and the source gNB/cell provides a CHO configuration to the UE, in which the one or more candidate target cells and the one or more handover conditions are defined or indicated, which may also be referred to as a CHO command (steps 6-7). Then, the UE evaluates fulfillment of the one or more handover conditions for any one of the candidate target gNBs/cells, and initiates CHO execution / PRACH communication (using legacy PRACH resources) with one candidate target gNB/cell (identified as the CHO target cell) for which the one or more handover conditions are evaluated to be fulfilled (steps 8-9). Based thereon, the CHO is executed / completed (step 10), wherein the UE detaches/disconnects from the source gNB/cell and synchronizes with and attaches/connects to this CHO target cell.

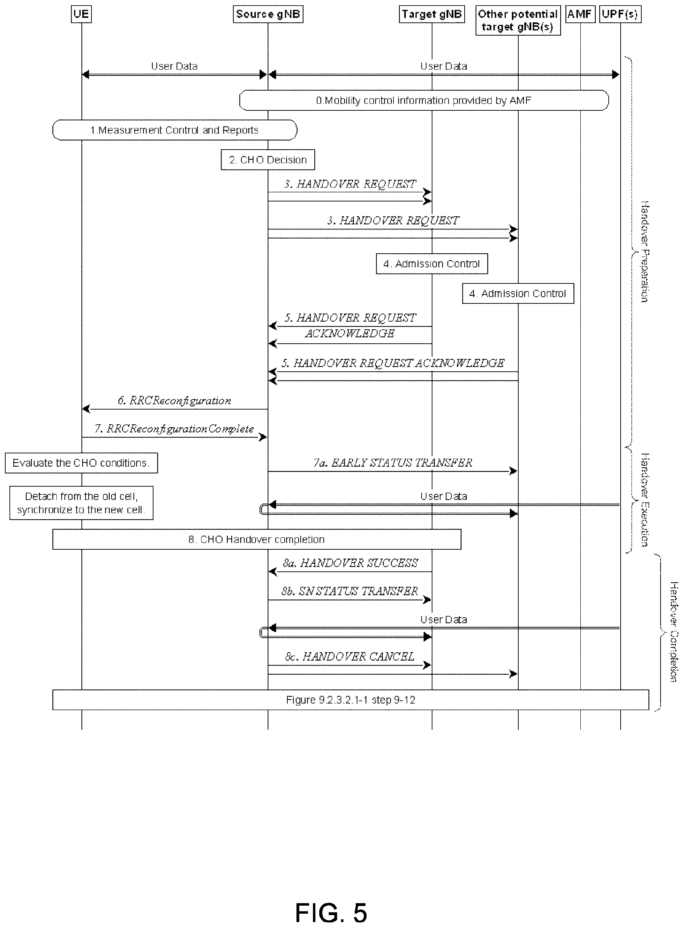

FIG. 5 shows an example intra-AMF/UPF conditional handover procedure, which is one of 5G/NR-related implementations of a conditional handover procedure. For details, reference is made to 3GPP TS 38.300 V18.3.0 (September 2024), section 9.2.3.4.

In 3GPP standardization, a work item relates to network energy saving (NES), including provision and operation of NES-capable UEs. In this regard, one objective relates to the specific adaptation of common signal/channel transmissions, which - among other points - includes PRACH adaptation, particularly an adaptation of PRACH in time-domain. For adaptation of PRACH in time-domain, additional PRACH resources (in addition to legacy PRACH resources) are configured based on at least a PRACH configuration index. Accordingly, PRACH adaptation refers to additional PRACH resources.

It is to be noted that, whenever reference is made herein to PRACH resources, one or more PRACH resource are meant. Such reference to PRACH resource, e.g. one or more PRACH resources, is meant to encompass either all or part of related/concerned PRACH resources. For example, when referring to (one or more) PRACH resources configured at a gNB/cell, this shall refer to all of the (one or more) PRACH resources configured at the gNB/cell or subset thereof.

Generally, legacy PRACH resources can be in a form of time resources, e.g. subframes, and/or frequency resources, e.g. additional PRBs, and/or additional preambles. Additional PRACH resources can be in a form of additional time resources, e.g. additional subframes, and/or additional frequency resources, e.g., additional PRBs, and/or additional preambles. As compared with legacy PRACH resources, additional PRACH resources are PRACH resources that are semi-statically configured and can be dynamically activated and deactivated. Legacy PRACH resources may be referred to as statically configured and always activated. Also, legacy PRACH resources are configured for and can be used by all UEs, while additional PRACH resources are configured for and can be used by specific UEs only, e.g. UEs capable of detecting additional PRACH resources, such as e.g. NES-capable UEs.

In the context of the aforementioned work item relating to network energy saving (NES) and NES-capable UEs, PRACH adaptation can be realized for NES-capable UEs. This means that additional PRACH resources can be in a form of additional time resources, e.g. additional subframes, and/or additional frequency resources, e.g., additional PRBs, and/or additional preambles, which are dedicated for NES-capable UEs, and/or additional PRACH resources can be semi-statically configured for NES-capable UEs.

In the following, explanations are given for this specific scenario, i.e. PRACH adaptation and/or additional PRACH resources for NES-capable UEs. However, it is to be noted that such explanations are generally applicable for PRACH adaptation and/or additional PRACH resource, even if not related to NES-capable UEs.

For configuring additional PRACH resources, the PRACH configuration index may be the same as and/or different from the PRACH configuration index for configuring legacy PRACH resources.

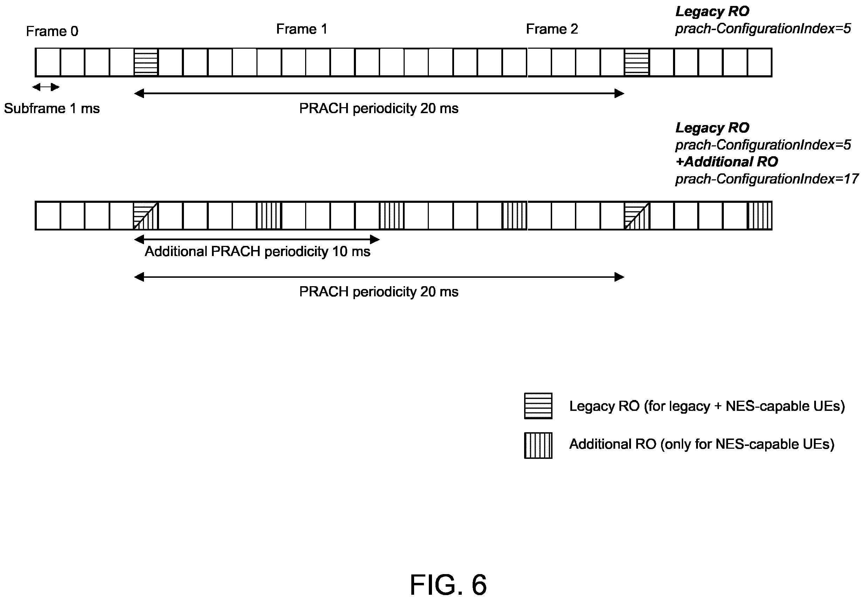

FIG. 6 shows an example PRACH adaptation scenario based on a different PRACH configuration index, i.e. a PRACH configuration index which is different from the PRACH configuration index used for legacy PRACH resources.

In the example of FIG. 6, the upper part shows a legacy PRACH configuration, in which legacy PRACH resources (i.e. ROs indicated by boxes with horizontal shading) are configured with prach-ConfigurationIndex=5. This legacy PRACH configuration is valid/applicable for legacy UEs and NES-capable UEs (as a non-limiting example of UEs being capable of detecting additional PRACH resources). The lower part shows an additional PRACH configuration (PRACH adaptation), in which legacy PRACH resources (i.e. ROs indicated by boxes with horizontal shading) are configured with prach-ConfigurationIndex=5 and additional PRACH resources (i.e. ROs indicated by boxes with vertical shading) are configured with prach-ConfigurationIndex=17. This additional PRACH configuration is valid/applicable for NES-capable UEs (as a non-limiting example of UEs being capable of detecting additional PRACH resources) only.

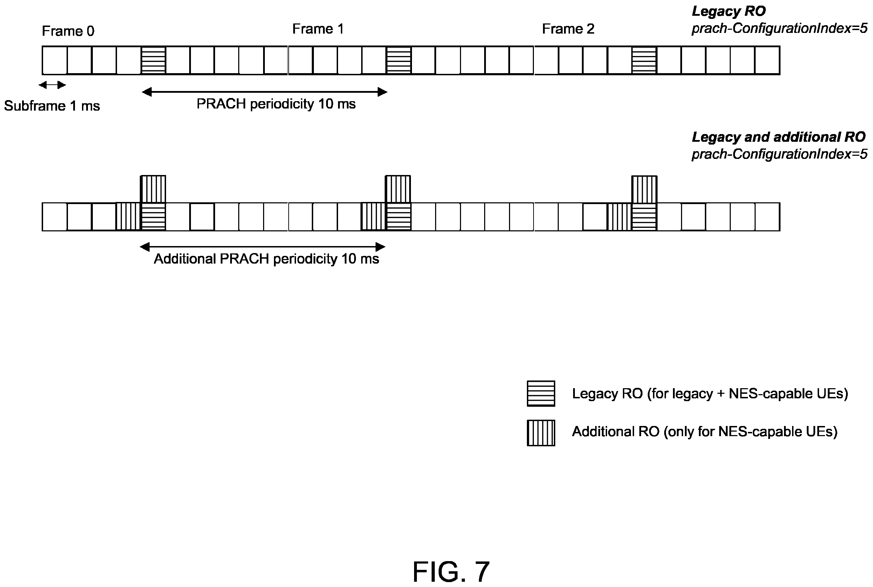

FIG. 7 shows an example PRACH adaptation scenario based on the same PRACH configuration index, i.e. a PRACH configuration index which is the same as the PRACH configuration index used for legacy PRACH resources.

In the example of FIG. 7, the upper part shows a legacy PRACH configuration, in which legacy PRACH resources (i.e. ROs indicated by boxes with horizontal shading) are configured with prach-ConfigurationIndex=5. This legacy PRACH configuration is valid/applicable for legacy UEs and NES-capable UEs (as a non-limiting example of UEs being capable of detecting additional PRACH resources). The lower part shows an additional PRACH configuration (PRACH adaptation), in which both the legacy PRACH resources (i.e. ROs indicated by boxes with horizontal shading) and the additional PRACH resources (i.e. ROs indicated by boxes with vertical shading) are configured with prach-ConfigurationIndex=5, wherein the additional ROs occupy a subframe earlier than the legacy ROs and/or additional resources in frequency domain, i.e. some time and/or frequency shift is applied. This additional PRACH configuration is valid/applicable for NES-capable UEs (as a non-limiting example of UEs being capable of detecting additional PRACH resources) only.

A cell can enable PRACH adaptation by which additional PRACH resources are made available, e.g. for NES-capable UEs, in addition to the PRACH resources which are available for legacy UEs. It can also exchange information with neighboring cells about the PRACH resources, e.g. the PRACH configuration index. But, since the additional PRACH resources are not available all the time (i.e. they are semi-statically configured and can be dynamically activated and deactivated), the information about their activation/deactivation should be accurately exchanged between nodes to be of use by neighboring cells.

For instance, if one cell configures additional PRACH resources, e.g. for NES-capable UEs, which coincides with regular handover preparation, it should ensure that those additional PRACH resources are available/valid, i.e. configured and activated, when the handover is performed.

But for conditional handover (as described above), this becomes an issue as the network does not know the time instant when the UE initiates execution of the CHO, i.e. a RACH communication for executing the CHO. So, it may happen that a (e.g. NES-capable) UE triggers the CHO towards the target cell using additional PRACH resources configured at the target cell, but these additional PRACH resources are currently deactivated (inactive). Alternatively, the (e.g. NES-capable) UE may wait till the next legacy RACH (or random access) occasion (RO) for initiating execution of the CHO, i.e. a RACH communication for executing the CHO, while such next legacy RO can be very sparse, particularly e.g. in a cell that is in NES mode, while additional ROs are made available for (e.g. NES-capable) UEs.

Accordingly, there is an impact of PRACH adaptation (or, stated differently, additional PRACH resources) in conditional handover procedures in terms of operability, performance and/or efficiency. In view thereof, the technique(s) disclosed herein refers to at least part of such aspects, issues or considerations which are exemplified in the context of a 5G/NR system. The technique(s) disclosed herein generally refer to conditional handover with PRACH adaptation (or, stated differently, additional PRACH resources).

FIG. 8 shows a flowchart of a first example method or process (e.g. corresponding to or relating to or based on the first example of the aforementioned conditional handover procedures). This example method or process may be performed or carried out at/by an apparatus. The apparatus may implement (at least in part) a user equipment or, stated in other words, the method or process may be a method or process of (or, stated in other words, operable or for use in/by) a user equipment. The user equipment may be an example of a user equipment (UE) of a communication system in the aforementioned conditional handover procedures.

As shown in FIG. 8, the method or process comprises a step/operation (S 110) of configuring for a conditional handover of the user equipment from a serving cell of the user equipment to a candidate target cell of the conditional handover, and a step/operation (S 120) of obtaining information about usability (or applicability or availability) of one or more additional physical random access channel, PRACH, resources, which are configured at the candidate target cell of the conditional handover, for the conditional handover. For example, the step/operation S 110 may comprise receiving, from a base station of the serving cell, a CHO configuration and/or one or more CHO commands (each) associated with one or more triggering conditions for a CHO to a target cell associated with a target base station.

As shown in FIG. 8, the method or process may comprise a step/operation (S130) of determining, based on the information about usability (or applicability or availability), one or more additional PRACH resources configured at the candidate target cell, which are usable (or applicable or available) for the conditional handover. Such step/operation may comprise determining, based on the information about usability (or applicability or availability), that one or more additional PRACH resources configured at the candidate target cell are activated or deactivated, wherein any activated additional PRACH resource is usable (or applicable or available) for the conditional handover.

As shown in FIG. 8, the method or process may comprise a step/operation (S140) of initiating, based on the information about usability (or applicability or availability), execution of the conditional handover using one or more additional PRACH resources configured at the candidate target cell, which are usable (or applicable or available) for the conditional handover, or one or more legacy PRACH resources configured at the candidate target cell.

An apparatus (e.g. user equipment) which is adapted, configured or operable to perform or carry out the functionalities or operations shown in FIG. 8 comprises corresponding structural and/or functional facilities. This apparatus (e.g. user equipment) may be constructed, embodied or realized in various ways. For example, the apparatus (e.g. user equipment) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 8, any one of blocks S110-S 140 can be regarded as (representation of) an instruction, a circuitry, or the like of a related apparatus (e.g. user equipment).

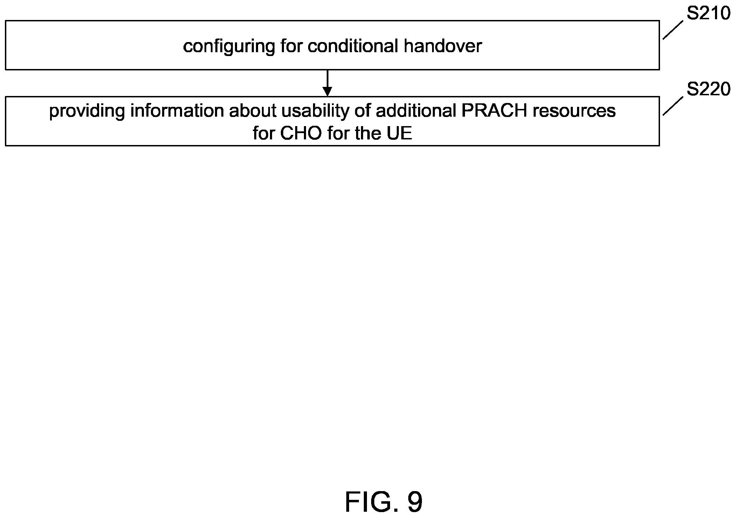

FIG. 9 shows a flowchart of a first example method or process (e.g. corresponding to or relating to or based on the first example of the aforementioned conditional handover procedures). This example method or process may be performed or carried out at/by an apparatus. The apparatus may implement (at least in part) a base station of a serving cell of a user equipment or, stated in other words, the method or process may be a method or process of (or, stated in other words, operable or for use in/by) a base station of a serving cell of a user equipment. The base station of a serving cell of a user equipment may be an example of a source gNB/cell (cell A) of a communication system in the aforementioned conditional handover procedures.

As shown in FIG. 9, the method or process comprises a step/operation (S210) of configuring for a conditional handover of the user equipment from the serving cell of the user equipment to a candidate target cell of the conditional handover, and a step/operation (S220) of providing, for the user equipment, information about usability (or applicability or availability) of one or more additional physical random access channel, PRACH, resources, which are configured at the candidate target cell of the conditional handover, for the conditional handover. For example, the step/operation S210 may comprise transmitting, to the user equipment, one or more CHO commands (each) associated with one or more triggering conditions for a CHO to a target cell associated with a target base station.

An apparatus (e.g. base station) which is adapted, configured or operable to perform or carry out the functionalities or operations shown in FIG. 9 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 9, any one of blocks S210-S220 can be regarded as (representation of) an instruction, a circuitry, or the like of a related apparatus (e.g. base station).

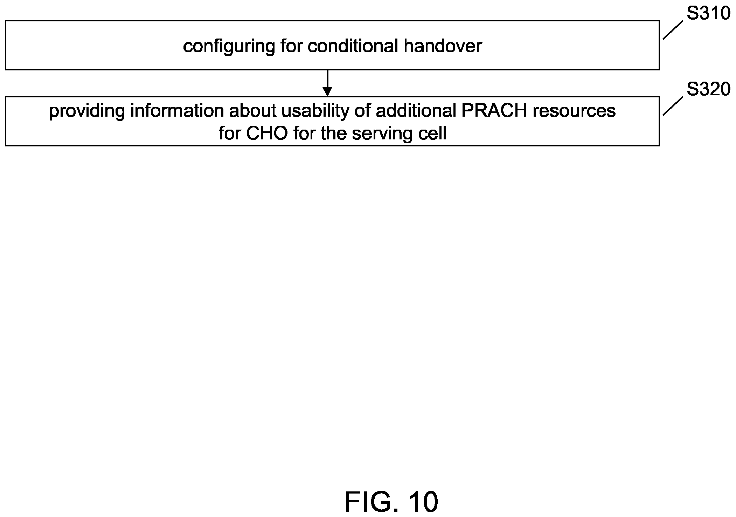

FIG. 10 shows a flowchart of a first example method or process (e.g. corresponding to or relating to or based on the first example of the aforementioned conditional handover procedures). This example method or process may be performed or carried out at/by an apparatus. The apparatus may implement (at least in part) a base station of a candidate target cell of a conditional handover of a user equipment or, stated in other words, the method or process may be a method or process of (or, stated in other words, operable or for use in/by) a base station of a candidate target cell of a conditional handover of a user equipment. The base station of a candidate target cell of a conditional handover of a user equipment may be an example of a target gNB/cell (cell B) of a communication system in the aforementioned conditional handover procedures.

As shown in FIG. 10, the method or process comprises a step/operation (S310) of configuring for a conditional handover of the user equipment from a serving cell of the user equipment to the candidate target cell of the conditional handover, and a step/operation (S320) of providing, for the serving cell, information about usability (or applicability or availability) of one or more additional physical random access channel, PRACH, resources, which are configured at the candidate target cell of the conditional handover, for the conditional handover. For example, the step/operation S310 may comprise configuring the one or more additional PRACH resources.

An apparatus (e.g. base station) which is adapted, configured or operable to perform or carry out the functionalities or operations shown in FIG. 10 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 10, any one of blocks 5310-5320 can be regarded as (representation of) an instruction, a circuitry, or the like of a related apparatus (e.g. base station).

For potential specifics, contents, realizations, etc. of the steps/operations of any one of FIGs, 8 to 10, reference is made to (certain/various respects of/in) the second and/or third examples described below. As is evident to a skilled person, certain/various functionalities, operations, features, etc. of the second and/or third examples can be applied accordingly. That is, the teaching of (certain/various respects of) the first example can be combined with the teaching of (certain/various respects of) the second and/or third examples, as is appropriate.

For example, referring to the UE by way of example, step/operation S110 may comprise, be embodied by, relate to or be associated with step/operation S410 and/or steps/operations S710 and/or S720. Additionally or alternatively, step/operation S 120 may comprise, be embodied by, relate to or be associated with any one or more of steps/operations S420-S450 and/or step/operation S730. Additionally or alternatively, step/operation S130 may comprise, be embodied by, relate to or be associated with step/operation S460 and/or any one or more of steps/operations S740-S760. Additionally or alternatively, step/operation S140 may comprise, be embodied by, relate to or be associated with step/operation S460 and/or step/operation S770.

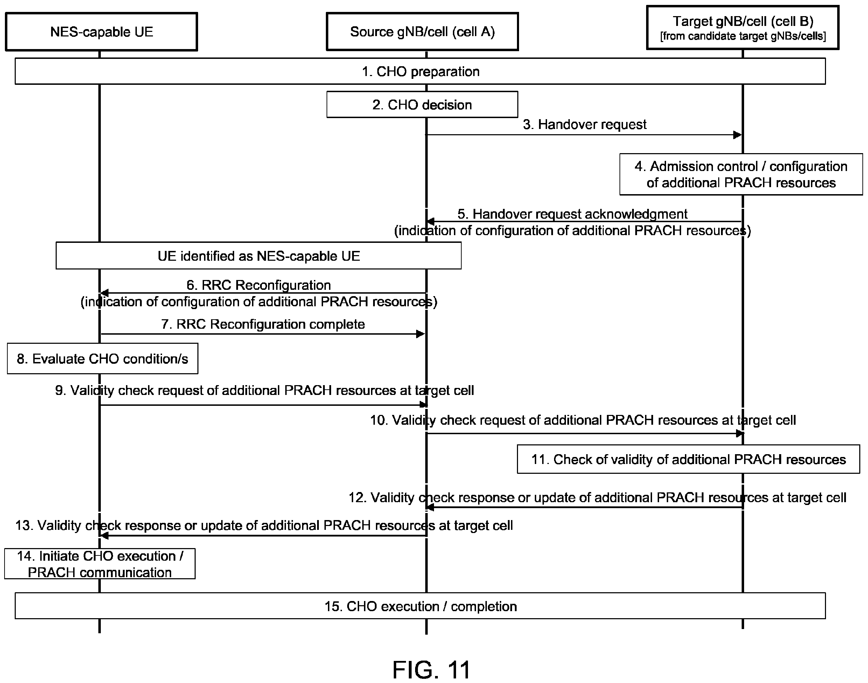

FIG. 11 shows a second example of a conditional handover procedure with PRACH adaptation. In this example, it is assumed that the UE is a NES-capable UE, and the UE (which is in RRC connected mode) is currently connected to the source gNB/cell such that cell A represents the serving cell of the UE. Further, it is assumed that target gNB/cell (which may be referred to as neighbor gNB/cell of source gNB/cell) is one of one or more candidate target gNBs/cells being prepared in the context of CHO preparation such that cell B represents a candidate target cell of CHO, and the target gNB/cell can configure (and dynamically activate and deactivate) additional PRACH resources being dedicated to NES-capable UEs in addition to legacy PRACH resources being usable (or applicable or available) by all UEs. The source gNB/cell and the one of one or more candidate target gNBs/cells can be of or operate in the same RAT or different RATs.

While reference is made to the above description of FIG. 4 for the basic operations of the conditional handover procedure, the specific operations for PRACH adaptation are explained below.

Upon receiving the CHO handover request from the source gNB/cell, the target gNB/cell configures additional PRACH resources (step 4). These additional PRACH resources can be dedicated for the CHO (under preparation) and/or for NES-capable UEs. Then, the target gNB/cell transmits an indication of a configuration of the additional PRACH resources to the source gNB/cell (step 5). This indication may be included in a handover request acknowledgment message or may be transmitted in a separate message, signaling, or the like. The source gNB/cell receives the indication of the configuration of the additional PRACH resources from the target gNB/cell. The source gNB/cell knows that the UE is (identified as) a NES-capable UE. Although this is indicated at this point in FIG. 11 for the sake of illustration, it is to be noted that no identification operation necessarily takes place here, but the source gNB/cell already identifies the UE as a NES-capable UE earlier, e.g. when the RRC connection with the UE is established. The source gNB/cell transmits the indication of the configuration of the additional PRACH resources to the UE (step 6). This indication may be included in a RRC configuration message (e.g. RRC reconfiguration), which may also include CHO command(s) and/or CHO configuration (in which e.g. the (list of) candidate target cells and the handover conditions are defined or indicated), or may be transmitted in a separate message, signaling, or the like. Thereby, the UE knows that additional PRACH resources are configured at the target gNB/cell, which could be used by the UE in CHO execution.

It is to be noted that indication of the configuration of the additional PRACH resources may be understood to comprise the additional PRACH resources. The UE may thus receive (the configuration of) the additional PRACH resources configured at the candidate target cell (step 6).

Then, the UE evaluates fulfillment of one or more handover conditions for any one of the candidate target gNBs/cells (step 8). Here, it is assumed that the UE evaluates the one or more handover conditions to be fulfilled for the target gNB/cell and thus identifies cell B as the target cell for CHO.

Thereupon, the UE checks the activation (or validity) of the additional PRACH resources configured at the target gNB/cell. To this end, the UE transmits a validity check request, i.e. a request for informing or verifying or checking about validity (status) or activation (status) of the one or more additional PRACH resources configured at the target gNB/cell, to the source gNB/cell. This request may be in the form of or included in e.g. an RRC message (e.g. UEAssistanceInformation) or a new Scheduling Request (SR), or the like. Upon receiving the validity check request from the UE, the source gNB/cell transmits a corresponding validity check request, i.e. a request for informing or verifying or checking about validity (status) or activation (status) of the one or more additional PRACH resources configured at the target gNB/cell, to the target gNB/cell. Such request may be understood as a message to the target gNB/cell to inform or verify or check the validity (status) or activation (status) or to trigger or provide an update of the additional PRACH resources which are configured at the target gNB/cell, e.g. referring to the additional PRACH resources for NES-capable UEs.

Upon receiving the validity check request from the source gNB/cell, the target gNB/cell checks validity (status) or activation (status) of the one or more additional PRACH resources configured at the target gNB/cell. That is, the target gNB/cell verifies or checks whether and/or which ones of additional PRACH resources are activated or deactivated at the target gNB/cell (step 11).

As a result thereof, the target gNB/cell transmits a corresponding response to the source gNB/cell (step 12). The target gNB/cell can verify or check whether and/or which ones of the additional PRACH resources are activated or deactivated, the configuration of which has been indicated before (step 5), and can thus provide, a validity check response comprising an indication of these additional PRACH resources being activated or deactivated. For example, the response can indicate that the additional PRACH resources are currently activated or that the additional PRACH resources are currently deactivated. At the target gNB/cell, reception of the validity check request from the source gNB/cell can suggest a potential load increase due to an upcoming handover, and thus can activate or trigger activation of the additional PRACH resources, the configuration of which has been indicated before (step 5), such that the result of the verification or check of their validity (status) or activation (status) in the validity check response is affirmative. The target gNB/cell can verify or check that different additional PRACH resources are activated, which are different from those additional PRACH resources, the configuration of which has been indicated before (step 5). The target gNB/cell can thus provide a validity check update comprising an indication of these different additional PRACH resources being activated.

Upon receiving the validity check response or update from the target gNB/cell, the source gNB/cell transmits a corresponding validity check response or update to the UE (step 13). This response or update may be in the form of or included in e.g. an RRC message (e.g. RRC ReconfigurationComplete) or a MAC CE or a PDCCH command. This response or update indicates the validity (status) or activation (status) of the additional PRACH resources that were previously indicated or the updated additional PRACH resources that are currently activated. Based on (the indication of/in) the validity check response or update, the UE can determine validity (status) or activation (status) of additional PRACH resources configured at the target gNB/cell, e.g. that the additional PRACH resources configured at the target gNB/cell are activated or deactivated, or that different additional PRACH resources configured at the target gNB/cell are activated. In case the UE does not receive any message, i.e. validity check response or update, from the source gNB/cell, at least within a predetermined time period, or the UE receives a message/response from the source gNB/cell, which indicates or includes an indication of absence of a response from the target gNB/cell, the UE can determine that the additional PRACH resources configured at the target gNB/cell are deactivated (and there are no different additional PRACH resources configured at the target gNB/cell, which are activated). Thereby, the UE knows whether any or which ones of additional PRACH resources are activated or deactivated at the target gNB/cell, which could be used by the UE in CHO execution. That is, the UE takes into consideration the received response or absence of response from the source gNB/cell and can use additional PRACH resources (if indicated as activated) towards the target gNB/cell. For example, the UE may (determine to) use the additional PRACH resources if indicated as activated (and if they provide the earliest RO). Otherwise, the UE may (determine to) use legacy PRACH resources.

Based on this determination or knowledge of additional PRACH resources which are activated or deactivated at the target gNB/cell, the UE initiates CHO execution / PRACH communication (step 14). The UE initiates CHO execution with the target gNB/cell using activated additional PRACH resources. The UE may also take into account whether the activated additional PRACH resources are earlier than the legacy PRACH resources. The UE may initiate CHO execution with the target gNB/cell using legacy PRACH resources if there are no activated additional PRACH resources or the RO of the legacy PRACH resources is earlier than the earliest RO of the additional PRACH resources. Then, the UE executes / completes the CHO (step 15).

For example, when the UE determines, based on a response/update from the serving gNB/cell, that the additional PRACH resources configured at the target gNB/cell are activated and/or different additional PRACH resources configured at the target gNB/cell are activated, the UE can initiate execution of the CHO from the serving gNB/cell to the target gNB/cell using the activated additional PRACH resources and/or the activated different additional PRACH resources configured at the target gNB/cell. For example, when the UE determines, based on a response from the serving gNB/cell or absence of a response from the serving gNB/cell, that the additional PRACH resources configured at the candidate target cell are deactivated, the UE can initiate execution of the CHO from the serving gNB/cell to the target gNB/cell using legacy PRACH resources configured at the target gNB/cell. For example, when the UE determines, based on a response/update from the serving gNB/cell, that the additional PRACH resources configured at the target gNB/cell are activated and/or different additional PRACH resources configured at the target gNB/cell are activated, the UE can initiate execution of the CHO from the serving gNB/cell to the target gNB/cell upon an earliest RO, wherein the earliest RO is (based on) the activated additional PRACH resources configured at the target gNB/cell or (based on) legacy PRACH resources configured at the target gNB/cell.

As an illustrative example, it is assumed that the target gNB/cell has configured three additional PRACH resources PRACH-1, PRACH-2 and PRACH-3 (mutually differing in the specified set of time resource, frequency resources and preamble). Then, the indication of the configuration of the additional PRACH resources refers to PRACH-1, PRACH-2 and PRACH-3, and the validity check requests from the UE to the source gNB/cell and from the source gNB/cell to the target gNB/cell refer to PRACH-1, PRACH-2 and PRACH-3, respectively.

In this illustrative example, for example, the check at the target gNB/cell can reveal that PRACH-1 is activated while PRACH-2 and PRACH-3 are deactivated, whereupon the target gNB/cell can provide an indication of PRACH-1 being activated or an indication of PRACH-1 being activated and PRACH-2 and PRACH-3 being deactivated or an indication of PRACH-2 and PRACH-3 being deactivated to the source gNB/cell, which the source gNB/cell forwards to the UE. Based thereon, the UE can initiate execution of the CHO using PRACH-1 (or legacy PRACH resources, whichever has the earlier RO).

In this illustrative example, for example, the check at the target gNB/cell can reveal that PRACH-1, PRACH-2 and PRACH-3 are deactivated but PRACH-4 (as a different PRACH resource) is activated, whereupon the target gNB/cell can provide an indication of PRACH-4 being activated or an indication of PRACH-4 being activated and PRACH-1, PRACH-2 and PRACH-3 being deactivated to the source gNB/cell, which the source gNB/cell forwards to the UE. Based thereon, the UE can initiate execution of the CHO using PRACH-4 (or legacy PRACH resources, whichever has the earlier RO).

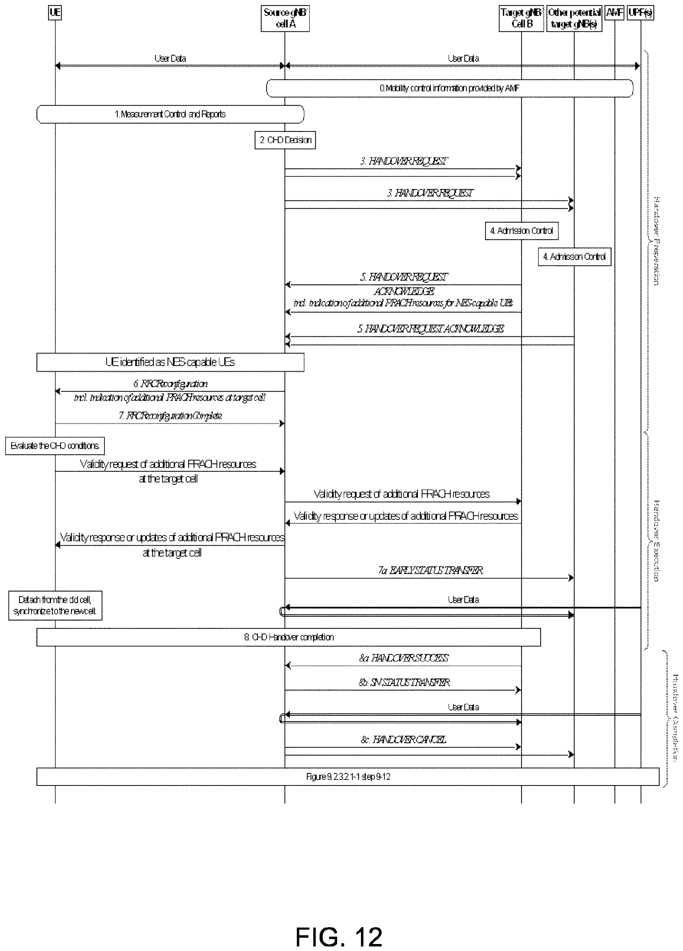

FIG. 12 shows a second example of an intra-AMF/UPF conditional handover procedure with PRACH adaptation. In this example, similar assumption as described above for FIG. 11 apply accordingly.

While reference is made to the description of 3GPP TS 38.300 V18.3.0 (September 2024), section 9.2.3.4 for the basic operations of the intra-AMF/UPF conditional handover procedure, the specific operations for PRACH adaptation are similar to those described above for FIG. 11. Hence, reference is made to the description of FIG. 11 for details, which applies accordingly despite potential deviations in certain denominations (such as e.g. "validity request" rather than "validity check request", or the like).

With the above procedures of FIGs. 11 and/or 12, PRACH adaptation (at a target cell) does not raise an issue for conditional handover. This is because the (e.g. NES-capable) UE obtains information about usability (e.g. activation status) of additional PRACH resources for the CHO before initiating the CHO execution, wherein this information is obtained upon request/inquiry by the UE (after/upon evaluation of the CHO conditions and/or identification of the target cell). Thus, it may not happen that a (e.g. NES-capable) UE triggers the CHO towards the target cell using additional PRACH resources configured at the target cell, but these additional PRACH resources are currently deactivated (inactive), or the (e.g. NES-capable) UE waits till the next legacy RO for initiating execution of the CHO, i.e. a RACH communication for executing the CHO, while additional ROs are made available for (e.g. NES-capable) UEs.

It is to be noted that, when in conjunction with FIGs. 11 and/or 12 reference is made to a single candidate target cell, at least one candidate target cell (i.e. one or more candidate target cells) is meant or encompassed. The functionalities or operations of the referenced candidate target cell can equally be performed/realized by any other candidate target cell (of the (list of) candidate target cells, e.g. as defined or indicated in the CHO configuration). Hence, the UE can obtain and process corresponding information from one, more or all candidate target cells included in the CHO preparation.

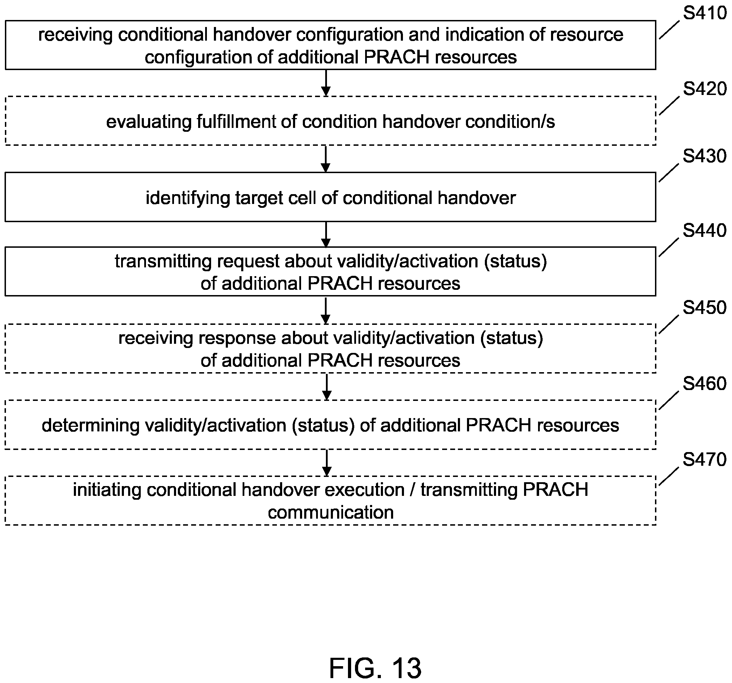

FIG. 13 shows a flowchart of a second example method or process (e.g. corresponding to or relating to or based on the second example of the aforementioned conditional handover procedures). This example method or process may be performed or carried out at/by an apparatus. The apparatus may implement (at least in part) a user equipment or, stated in other words, the method or process may be a method or process of (or, stated in other words, operable or for use in/by) a user equipment. The user equipment may be an example of a user equipment (UE) of a communication system in the aforementioned conditional handover procedures.

As shown in FIG. 13, the method or process comprises a step/operation (S410) of receiving, from a base station of a serving cell of the user equipment, a conditional handover configuration for a conditional handover of the user equipment and an indication of physical random access channel, PRACH, resources configured at (e.g. a resource configuration of one or more additional physical random access channel, PRACH, resources at) a candidate target cell of the conditional handover, comprise a step/operation (S430) of identifying the candidate target cell as a target cell of the conditional handover, and comprise a step/operation (S440) of transmitting, to the base station of the serving cell of the user equipment, a request for informing about activation of the one or more additional PRACH resources configured at the candidate target cell. It is to be noted that the aforementioned request may be or correspond to a validity check request, i.e. a request for informing or verifying or checking validity (status) or activation (status) of the one or more additional PRACH resources configured at the candidate target cell.

As shown in FIG. 13, the method or process may comprise a step/operation (S460) of determining, based on a response or absence of a response from the serving cell, activation of the one or more additional PRACH resources configured at the candidate target cell. Here, activation could refer to validity (status) or activation (status). The method or process may comprise a step/operation (S450) of receiving, from the base station of the serving cell of the user equipment, a response comprising an indication of the one or more additional PRACH resources configured at the candidate target cell being activated or deactivated, and a step/operation (S460) of determine, based on the response, that the one or more additional PRACH resources configured at the candidate target cell are activated or deactivated. The method or process may comprise a step/operation (S450) of receiving, from the base station of the serving cell of the user equipment, a response comprising an indication of different one or more additional PRACH resources configured at the candidate target cell being activated, and a step/operation (S460) of determining, based on the response, that the one or more additional PRACH resources configured at the candidate target cell are deactivated, and the different one or more additional PRACH resources configured at the candidate target cell are activated. The method or process may comprise a step/operation (S450) of receiving, from the base station of the serving cell of the user equipment, no response at least within a predetermined time period or a response comprising an indication of absence of a response from the candidate target cell, and a step/operation (S460) of determining, based on absence of a response or the response, that the one or more additional PRACH resources configured at the candidate target cell are deactivated. It is to be noted that any one of the aforementioned responses may be or correspond to a validity check response or update, i.e. a response/update indicating validity (status) or activation (status) of the additional PRACH resources or different additional PRACH resources.

As shown in FIG. 13, the method or process may comprise a step/operation (S420) of evaluating fulfillment of one or more conditional handover conditions, and a step/operation (S430) of identifying the candidate target cell as the target cell of the conditional handover when the one or more conditional handover conditions are evaluated to be fulfilled for the candidate target cell.

As shown in FIG. 13, the method or process may comprise a step/operation (S460) of determining, based on a response from the base station of the serving cell, that the one or more additional PRACH resources configured at the candidate target cell are activated and/or different one or more additional PRACH resources configured at the candidate target cell are activated, and a step/operation (S470) of initiating execution of the conditional handover from the serving cell to the target cell of the conditional handover using the activated one or more additional PRACH resources configured at the candidate target cell and/or the activated different one or more additional PRACH resources configured at the candidate target cell. The method or process may comprise a step/operation (S460) of determining, based on a response from the base station of the serving cell or absence of a response from the base station of the serving cell, that the one or more additional PRACH resources configured at the candidate target cell are deactivated, and a step/operation (S470) of initiating execution of the conditional handover from the serving cell to the target cell of the conditional handover using one or more legacy PRACH resources configured at the candidate target cell. The method or process may comprise a step/operation (S460) of determining, based on a response from the base station of the serving cell, that the one or more additional PRACH resources configured at the candidate target cell are activated and/or different one or more additional PRACH resources configured at the candidate target cell are activated, and a step/operation (S467) of initiating execution of the conditional handover from the serving cell to the target cell of the conditional handover upon an earliest random access channel, RACH, occasion, wherein the earliest RACH occasion is the activated one or more additional PRACH resources configured at the candidate target cell or one or more legacy configured at the candidate target cell. The method or process may comprise a step/operation (S470) of transmitting, to the base station of the candidate target cell, PRACH communication upon an earliest random access channel, RACH, occasion based on activated one or more additional PRACH resources configured at the candidate target cell or one or more legacy configured at the candidate target cell.

An apparatus (e.g. user equipment) which is adapted, configured or operable to perform or carry out the functionalities or operations shown in FIG. 13 comprises corresponding structural and/or functional facilities. This apparatus (e.g. user equipment) may be constructed, embodied or realized in various ways. For example, the apparatus (e.g. user equipment) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 13, any one of blocks S410-S470 can be regarded as (representation of) an instruction, a circuitry, or the like of a related apparatus (e.g. user equipment).

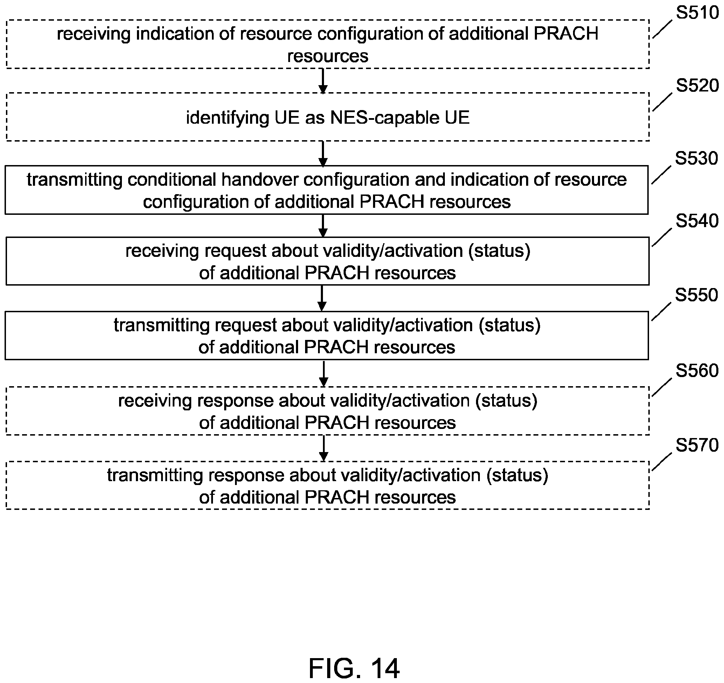

FIG. 14 shows a flowchart of a second example method or process (e.g. corresponding to or relating to or based on the second example of the aforementioned conditional handover procedures). This example method or process may be performed or carried out at/by an apparatus. The apparatus may implement (at least in part) a base station of a serving cell of a user equipment or, stated in other words, the method or process may be a method or process of (or, stated in other words, operable or for use in/by) a base station of a serving cell of a user equipment. The user equipment may be an example of a source gNB/cell (cell A) of a communication system in the aforementioned conditional handover procedures.

As shown in FIG. 14, the method or process comprises a step/operation (S530) of transmitting, to the user equipment, a conditional handover configuration for a conditional handover of the user equipment and an indication of one or more additional physical random access channel, PRACH, resources configured at (e.g. a resource configuration of one or more additional physical random access channel, PRACH, resources at) a candidate target cell of the conditional handover, a step/operation (S540) of receiving, from the user equipment, a request for informing about activation of the one or more additional PRACH resources configured at the candidate target cell, and a step/operation (S550) of transmitting, to a base station of the candidate target cell, a request for informing about activation of the one or more additional PRACH resources configured at the candidate target cell. It is to be noted that the aforementioned request may be or correspond to a validity check request, i.e. a request for informing or verifying or checking validity (status) or activation (status) of the one or more additional PRACH resources configured at the candidate target cell.

As shown in FIG. 14, the method or process may comprise a step/operation (S560) of receiving, from the base station of the candidate target cell, a response comprising an indication of the one or more additional PRACH resources configured at the candidate target cell being activated or deactivated, and a step/operation (S570) of transmitting, to the user equipment, a response, corresponding to the received response, the transmitted response comprising an indication of the one or more additional PRACH resources configured at the candidate target cell being activated or deactivated. The method or process may comprise a step/operation (S560) of receiving, from the base station of the candidate target cell, a response comprising an indication of different one or more additional PRACH resources configured at the candidate target cell being activated, and a step/operation (S570) of transmitting, to the user equipment, a response, corresponding to the received response, the transmitted response comprising an indication of different one or more additional PRACH resources configured at the candidate target cell being activated. The method or process may comprise a step/operation (S560) of receiving, from the base station of the candidate target cell, no response at least within a predetermined time period, and a step/operation (S570) of transmitting, to the user equipment, no response or a response comprising an indication of absence of a response from the candidate target cell. It is to be noted that the aforementioned response may be or correspond to a validity check response or update, i.e. a response/update indicating validity (status) or activation (status) of the additional PRACH resources or different additional PRACH resources.

As shown in FIG. 14, the method or process may comprise a step/operation (S510) of receiving, from the base station of the candidate target cell, an indication of the one or more additional PRACH resources configured at (e.g. the resource configuration of the one or more additional PRACH resources at) the candidate target cell. the method or process may comprise a step/operation (S520) of identifying the user equipment as a user equipment capable of detecting additional PRACH resources and/or a network energy saving, NES, capable user equipment, and a step/operation (S530) of transmitting the indication of the one or more additional PRACH resources configured at (e.g. the resource configuration of the one or more additional PRACH resources at) to the user equipment as a result of identifying the user equipment as a user equipment capable of detecting additional PRACH resources and/or a network energy saving, NES, capable user equipment.

An apparatus (e.g. base station) which is adapted, configured or operable to perform or carry out the functionalities or operations shown in FIG. 14 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 14, any one of blocks 5510-5570 can be regarded as (representation of) an instruction, a circuitry, or the like of a related apparatus (e.g. base station).

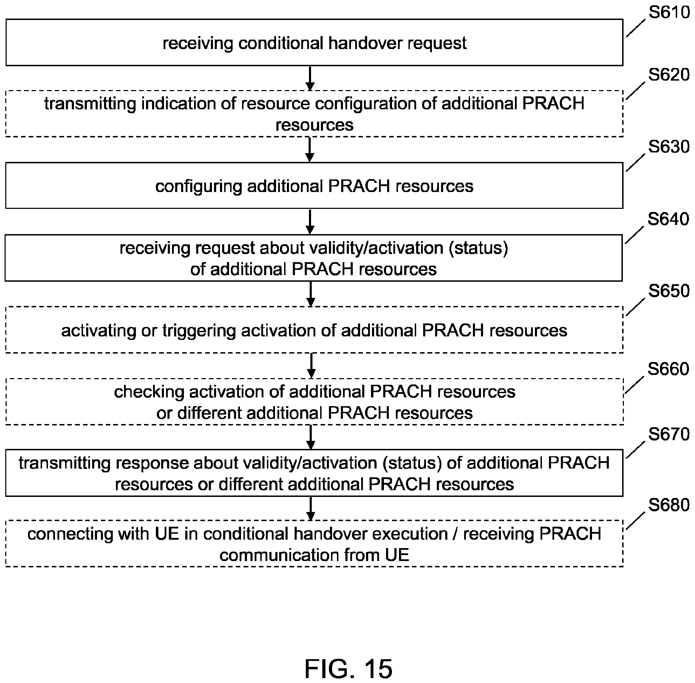

FIG. 15 shows a flowchart of a second example method or process (e.g. corresponding to or relating to or based on the second example of the aforementioned conditional handover procedures). This example method or process may be performed or carried out at/by an apparatus. The apparatus may implement (at least in part) a base station of a candidate target cell of a conditional handover of a user equipment or, stated in other words, the method or process may be a method or process of (or, stated in other words, operable or for use in/by) a base station of a candidate target cell of a conditional handover of a user equipment. The base station of a candidate target cell of a conditional handover of a user equipment may be an example of a (candidate) target gNB/cell (cell B) of a communication system in the aforementioned conditional handover procedures.

As shown in FIG. 15, the method or process comprises a step/operation (S610) of receiving, from a base station of a serving cell of the user equipment, a handover request for the conditional handover of the user equipment, a step/operation (S630) of configuring one or more additional physical random access channel, PRACH, resources, a step/operation (S640) of receiving, from the base station of the serving cell of the user equipment, a request for informing about activation of the one or more additional PRACH resources configured at the candidate target cell, and a step/operation (S670) of transmitting, to the base station of the serving cell of the user equipment, a response comprising an indication of the one or more additional PRACH resources configured at the candidate target cell being activated and/or deactivated or an indication of different one or more additional PRACH resources configured at the candidate target cell being activated. It is to be noted that the aforementioned request may be or correspond to a validity check request, i.e. a request for informing or verifying or checking validity (status) or activation (status) of the one or more additional PRACH resources configured at the candidate target cell. It is to be noted that any one of the aforementioned responses may be or correspond to a validity check response or update, i.e. a response/update indicating validity (status) or activation (status) of the additional PRACH resources or different additional PRACH resources.

As shown in FIG. 15, the method or process may comprise a step/operation (S620) of transmitting, to the base station of the serving cell, an indication of the one or more additional PRACH resources configured at (e.g. a resource configuration of the one or more additional PRACH resources at) the candidate target cell. The method or process may comprise a step/operation (S660) of checking activation of the one or more additional PRACH resources configured at the candidate target cell and/or different one or more additional PRACH resources configured at the candidate target cell. Here, activation could refer to validity (status) or activation (status). The method or process may comprise a step/operation (S650) of activating or triggering activation of the one or more additional PRACH resources configured at the candidate target cell upon receiving the request from the base station of the serving cell of the user equipment. The method or process may comprise a step/operation (S680) of connecting with the user equipment during execution of the conditional handover from the serving cell to the candidate target cell of the conditional handover using activated one or more additional PRACH resources configured at the candidate target cell or one or more legacy configured at the candidate target cell. The method or process may comprise a step/operation (S680) of receiving, from the user equipment, PRACH communication upon an earliest random access channel, RACH, occasion based on activated one or more additional PRACH resources configured at the candidate target cell or one or more legacy configured at the candidate target cell.

An apparatus (e.g. base station) which is adapted, configured or operable to perform or carry out the functionalities or operations shown in FIG. 15 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 15, any one of blocks S610-S680 can be regarded as (representation of) an instruction, a circuitry, or the like of a related apparatus (e.g. base station).

As is evident to a skilled person, certain/various functionalities, operations, features, etc. of the first and/or third examples can be applied accordingly. That is, the teaching of (certain/various respects of) the second example can be combined with the teaching of (certain/various respects of) the first and/or third examples, as is appropriate.

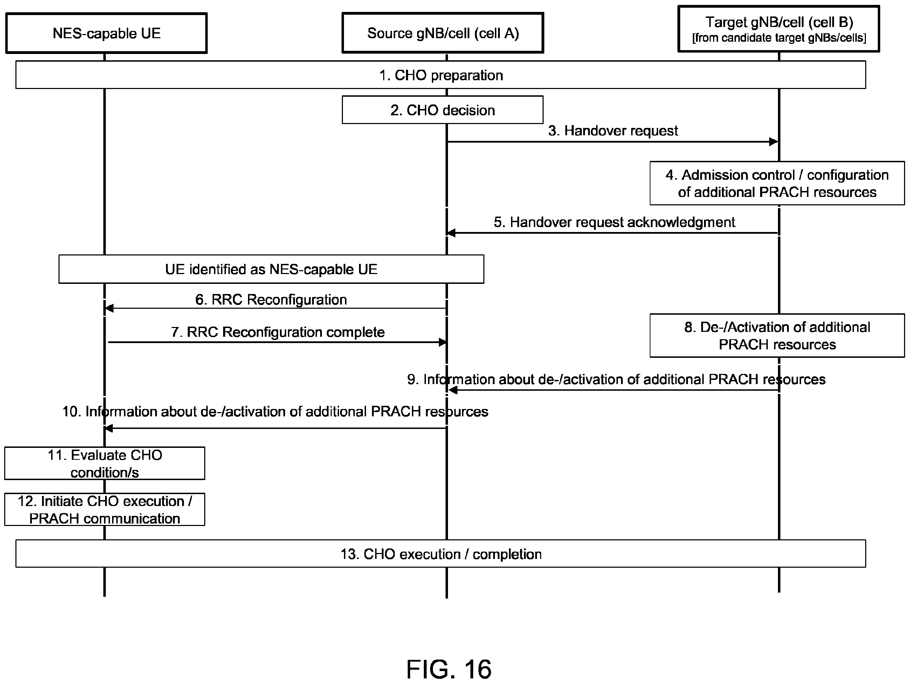

FIG. 16 shows a third example of a conditional handover procedure with PRACH adaptation. In this example, it is assumed that the UE is a NES-capable UE, and the UE (which is in RRC connected mode) is currently connected to the source gNB/cell such that cell A represents the serving cell of the UE. Further, it is assumed that target gNB/cell (which may be referred to as neighbor gNB/cell of source gNB/cell) is one of one or more candidate target gNBs/cells being prepared in the context of CHO preparation such that cell B represents a candidate target cell of CHO, and the target gNB/cell can configure (and dynamically activate and deactivate) additional PRACH resources being dedicated to NES-capable UEs in addition to legacy PRACH resources being usable (or applicable or available) by all UEs. The source gNB/cell and the one of one or more candidate target gNBs/cells can be of or operate in the same RAT or different RATs.

While reference is made to the above description of FIG. 4 for the basic operations of the conditional handover procedure, the specific operations for PRACH adaptation are explained below.

Upon receiving the CHO handover request from the source gNB/cell, the target gNB/cell configures additional PRACH resources (step 4). These additional PRACH resources can be dedicated for the CHO (under preparation) and/or for NES-capable UEs.

Optionally, the target gNB/cell may transmit an indication of a configuration of the additional PRACH resources to the source gNB/cell, This indication may be included in a handover request acknowledgment message or may be transmitted in a separate message, signaling, or the like. The source gNB/cell may receive the indication of the configuration of the additional PRACH resources from the target gNB/cell. The source gNB/cell knows that the UE (is identified) as a NES-capable UE. Although this is indicated at this point in FIG. 16 for the sake of illustration, it is to be noted that no identification operation necessarily takes place here, but the source gNB/cell already identifies the UE as a NES-capable UE earlier, e.g. when the RRC connection with the UE is established. The source gNB/cell may transmit the indication of the configuration of the additional PRACH resources to the UE (step 6). This indication may be included in a RRC configuration message (e.g. RRC reconfiguration), which may also include CHO command(s) and/or CHO configuration (in which e.g. the (list of) candidate target cells and the handover conditions are defined or indicated), or may be transmitted in a separate message, signaling, or the like. Thereby, the UE may know that additional PRACH resources are configured at the target gNB/cell, which could be used by the UE in CHO execution.

It is to be noted that the indication of the configuration of the additional PRACH resources may be understood to comprise the additional PRACH resources. The UE may thus receive (the configuration of) the additional PRACH resources configured at the candidate target cell (step 6).

The target gNB/cell may, at some time after configuration of the additional PRACH resource, activate and/or deactivate the additional PRACH resources (step 8). That is, at least part of the configured additional PRACH may be activated at some time, and at least part of the configured and activated additional PRACH may be deactivated at some later time. That is, the activation (or validity) status of the additional PRACH resources may be changed at/by the target gNB/cell. Upon such (change of) activation/deactivation of the additional PRACH resources, the target gNB/cell transmits information about de-/activation of the additional PRACH resources to the source gNB/cell (step 9). This information indicates the activation (or validity) status of the additional PRACH resources configured at the target gNB/cell, such as which ones of the additional PRACH resources configured at the target gNB/cell are activated and/or deactivated.

Upon receiving the information from the target gNB/cell, the source gNB/cell transmits corresponding information about de-/activation of the additional PRACH resources to the UE (step 10). This information from the source gNB/cell to the UE may be in the form of or included in e.g. (legacy) DCI, such as e.g. Paging DCI, or new/specific DCI dedicated for (the purpose of) PRACH adaptation and/or additional PRACH resources. Since the timing of the source gNB/cell can be different from the timing of the target gNB/cell, any information relating to timing, such as e.g. slot number, in such information from the source gNB/cell to the UE shall relate to the target gNB/cell rather than the source gNB/cell. The information about de-/activation of the additional PRACH resources configured at the target gNB/cell may be transmitted in combination or relation with information about de-/activation of additional PRACH resources configured at the source gNB/cell. Thereby, the UE knows whether any or which ones of additional PRACH resources are activated or deactivated at the target gNB/cell, which could be used by the UE in CHO execution. That is, the UE takes into consideration the received information from the source gNB/cell and can use additional PRACH resources (if indicated as activated) towards the target gNB/cell. For example, the UE may (determine to) use the additional PRACH resources if indicated as activated (and if they provide the earliest RO). Otherwise, the UE may (determine to) use legacy PRACH resources.

The UE evaluates fulfillment of one or more handover conditions for any one of the candidate target gNBs/cells (step 11). Here, it is assumed that the UE evaluates the one or more handover conditions to be fulfilled for the target gNB/cell and thus identifies cell B as the target cell of CHO. Based on the knowledge of additional PRACH resources which are activated or deactivated at the target gNB/cell, the UE initiates CHO execution / PRACH communication (Step 12). The UE initiates CHO execution with the target gNB/cell using activated additional PRACH resources. The UE may also take into account whether the activated additional PRACH resources are earlier than the legacy PRACH resources. The UE may initiate CHO execution with the target gNB/cell using legacy PRACH resources if there are no activated additional PRACH resources or the RO of the legacy PRACH resources is earlier than the earliest RO of the additional PRACH resources. Then, the UE executes / completes the CHO (step 13).

In evaluating fulfillment of one or more handover conditions (step 11), the UE can take into consideration the knowledge of additional PRACH resources which are activated or deactivated at the target gNB/cell. Specifically, the UE can evaluate fulfillment of one or more handover conditions for those candidate target gNBs/cells, which have currently activated additional PRACH resources, only or before evaluate fulfillment of one or more handover conditions for other candidate target gNBs/cells.

For example, when the UE determines, based on the information from the serving gNB/cell, that the additional PRACH resources configured at the target gNB/cell are activated, the UE can initiate execution of the CHO from the serving gNB/cell to the target gNB/cell using the activated additional PRACH resources configured at the target gNB/cell. For example, when the UE determines, based on the information from the serving gNB/cell, that the additional PRACH resources configured at the candidate target cell are deactivated, the UE can initiate execution of the CHO from the serving gNB/cell to the target gNB/cell using legacy PRACH resources configured at the target gNB/cell. For example, when the UE determines, based on the information from the serving gNB/cell, that the additional PRACH resources configured at the target gNB/cell are activated, the UE can initiate execution of the CHO from the serving gNB/cell to the target gNB/cell upon an earliest RO, wherein the earliest RO is (based on) the activated additional PRACH resources configured at the target gNB/cell or (based on) legacy PRACH resources configured at the target gNB/cell.

As an illustrative example, it is assumed that the target gNB/cell has configured three additional PRACH resources PRACH-1, PRACH-2 and PRACH-3 (mutually differing in the specified set of time resource, frequency resources and preamble). Then, the information about activation (or validity) of additional PRACH resources from the source gNB/cell to UE refer to PRACH-1, PRACH-2 and PRACH-3, respectively.

In this illustrative example, for example, PRACH-1 can activated while PRACH-2 and PRACH-3 can be deactivated, whereupon the target gNB/cell can provide an information of PRACH-1 being activated or an information of PRACH-1 being activated and PRACH-2 and PRACH-3 being deactivated to the source gNB/cell, which the source gNB/cell forwards to the UE. Based thereon, the UE can initiate execution of the CHO using PRACH-1 (or legacy PRACH resources, whichever has the earlier RO).

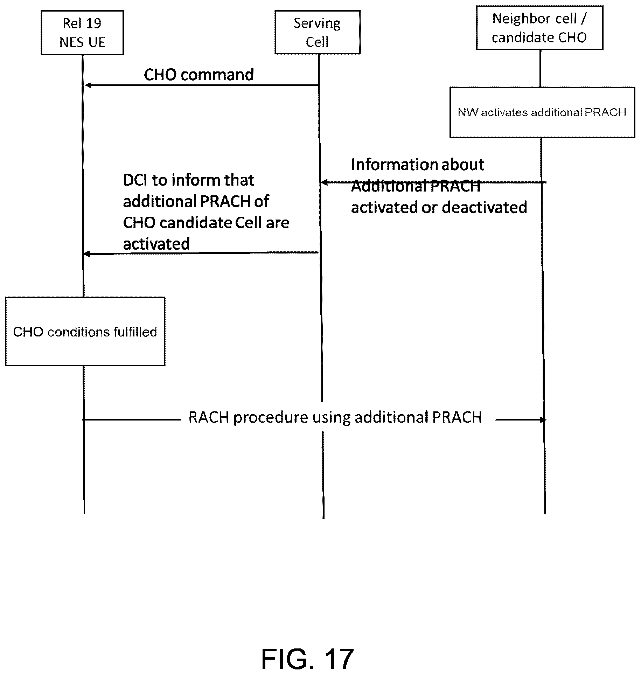

FIG. 17 shows a third example of a conditional handover procedure with PRACH adaptation. The procedure shown in FIG. 17 depicts specific operations for PRACH adaptation. For further details, reference is made to the description of steps 6 and 8-13 of FIG. 16, which apply accordingly despite potential deviations in certain denominations.

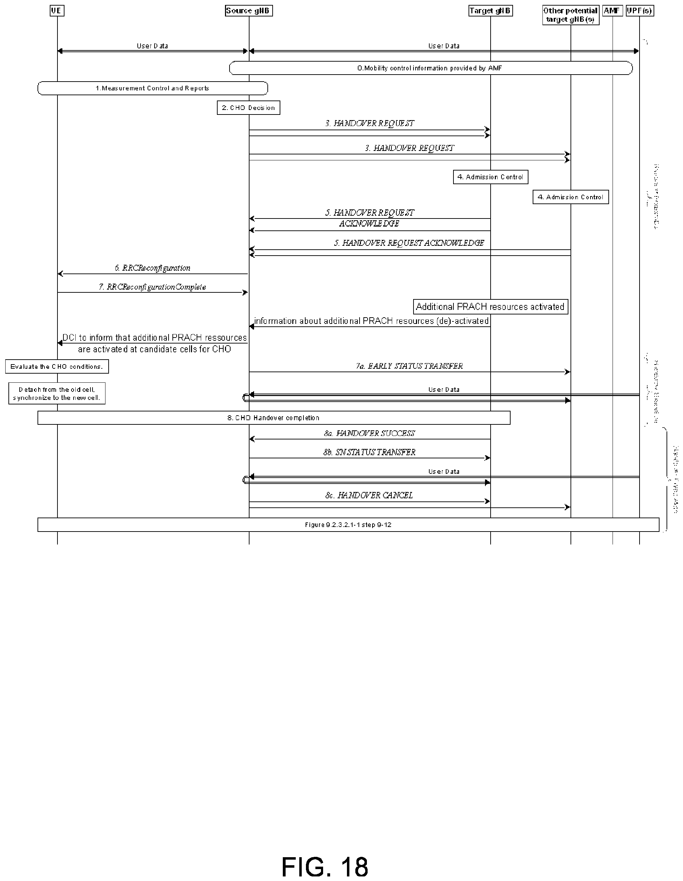

FIG. 18 shows a third example of an intra-AMF/UPF conditional handover procedure with PRACH adaptation. In this example, similar assumption as described above for FIG. 16 apply accordingly.

While reference is made to the description of 3GPP TS 38.300 V18.3.0 (September 2024), section 9.2.3.4 for the basic operations of the intra-AMF/UPF conditional handover procedure, the specific operations for PRACH adaptation are similar to those described above for FIG. 16. Hence, reference is made to the description of FIG. 16 for details, which applies accordingly despite potential deviations in certain denominations.

With the above procedures of any one of FIGs. 16 to 18, PRACH adaptation (at a target cell) does not raise an issue for conditional handover. This is because the (e.g. NES-capable) UE obtains information about usability (e.g. activation status) of additional PRACH resources for the CHO before initiating the CHO execution, wherein this information is provided in a proactive manner (i.e. without (the need of) a request/inquiry by the UE) from/by the target cell (possible even prior to evaluation of the CHO conditions and/or identification of the target cell). Thus, it may not happen that a (e.g. NES-capable) UE triggers the CHO towards the target cell using additional PRACH resources configured at the target cell, but these additional PRACH resources are currently deactivated (inactive), or the (e.g. NES-capable) UE waits till the next legacy RO for initiating execution of the CHO, i.e. a RACH communication for executing the CHO, while additional ROs are made available for (e.g. NES-capable) UEs.

It is to be noted that, when in conjunction with any one of FIGs. 16 to 18 reference is made to a single candidate target cell, at least one candidate target cell (i.e. one or more candidate target cells) is meant or encompassed. The functionalities or operations of the referenced candidate target cell can equally be performed/realized by any other candidate target cell (of the (list of) candidate target cells, e.g. as defined or indicated in the CHO configuration). Hence, the UE can obtain and process corresponding information from one, more or all candidate target cells included in the CHO preparation.

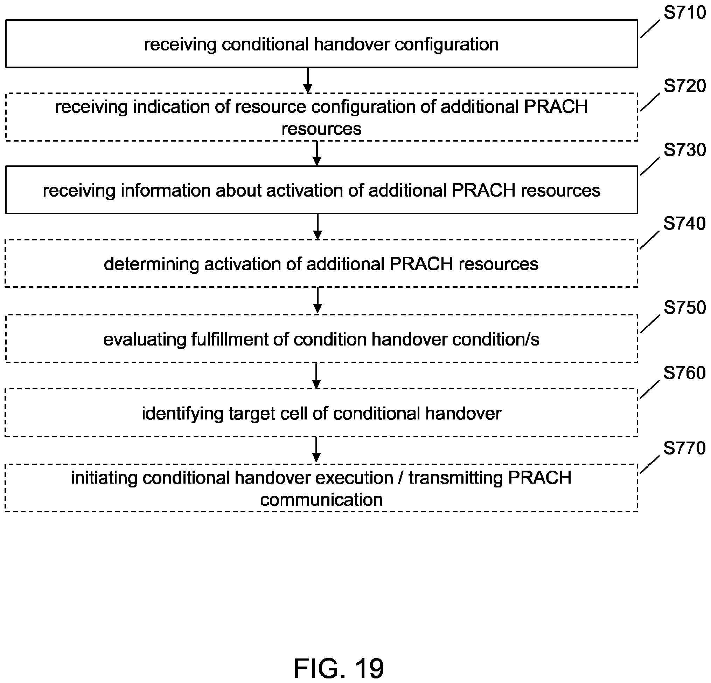

FIG. 19 shows a flowchart of a third example method or process (e.g. corresponding to or relating to or based on the third example of the aforementioned conditional handover procedures). This example method or process may be performed or carried out at/by an apparatus. The apparatus may implement (at least in part) a user equipment or, stated in other words, the method or process may be a method or process of (or, stated in other words, operable or for use in/by) a user equipment. The user equipment may be an example of a user equipment (UE) of a communication system in the aforementioned conditional handover procedures.

As shown in FIG. 19, the method or process comprises a step/operation (S710) of receiving, from a base station of a serving cell of the user equipment, a conditional handover configuration for a conditional handover of the user equipment, wherein the conditional handover configuration indicates a candidate target cell of the conditional handover, and a step/operation (S730) of receive, from the base station of the serving cell of the user equipment, information about activation of one or more additional physical random access channel, PRACH, resources configured at the candidate target cell.

As shown in FIG. 19, the method or process may comprise a step/operation (S740) of determining, based on the information about activation, activation of the one or more additional PRACH resources configured at the candidate target cell, and/or determining, based on the information about activation, that the one or more additional PRACH resources configured at the candidate target cell are activated or deactivated. The method or process may comprise a step/operation (S720) of receiving, from the base station of the serving cell of the user equipment, an indication of a resource configuration of the one or more additional PRACH resources at the candidate target cell of the conditional handover. The method or process may comprise a step/operation (S750) of evaluating fulfillment of one or more conditional handover conditions, and a step/operation (S760) of identifying the candidate target cell as the target cell of the conditional handover when the one or more conditional handover conditions are evaluated to be fulfilled for the candidate target cell.

As shown in FIG. 19, the method or process may comprise a step/operation (S740) of determining, based on the information about activation, that the one or more additional PRACH resources configured at the candidate target cell are activated and/or different one or more additional PRACH resources configured at the candidate target cell are activated, and a step/operation (S770) of initiating execution of the conditional handover from the serving cell to the target cell of the conditional handover (or transmitting PARCH communication) using the activated one or more additional PRACH resources configured at the candidate target cell.

As shown in FIG. 19, the method or process may comprise a step/operation (S740) of determining, based on the information about activation, that the one or more additional PRACH resources configured at the candidate target cell are deactivated, and a step/operation (S770) of initiating execution of the conditional handover from the serving cell to the target cell of the conditional handover (or transmitting PARCH communication) using one or more legacy PRACH resources configured at the candidate target cell.

As shown in FIG. 19, the method or process may comprise a step/operation (S740) of determining, based on the information about activation, that the one or more additional PRACH resources configured at the candidate target cell are activated and/or different one or more additional PRACH resources configured at the candidate target cell are activated, and a step/operation (S770) of initiating execution of the conditional handover from the serving cell to the target cell of the conditional handover (or transmitting PARCH communication) upon an earliest random access channel, RACH, occasion, wherein the earliest RACH occasion is the activated one or more additional PRACH resources configured at the candidate target cell or one or more P legacy RACH resources configured at the candidate target cell.

An apparatus (e.g. user equipment) which is adapted, configured or operable to perform or carry out the functionalities or operations shown in FIG. 19 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 19, any one of blocks S710-S770 can be regarded as (representation of) an instruction, a circuitry, or the like of a related apparatus (e.g. base station).

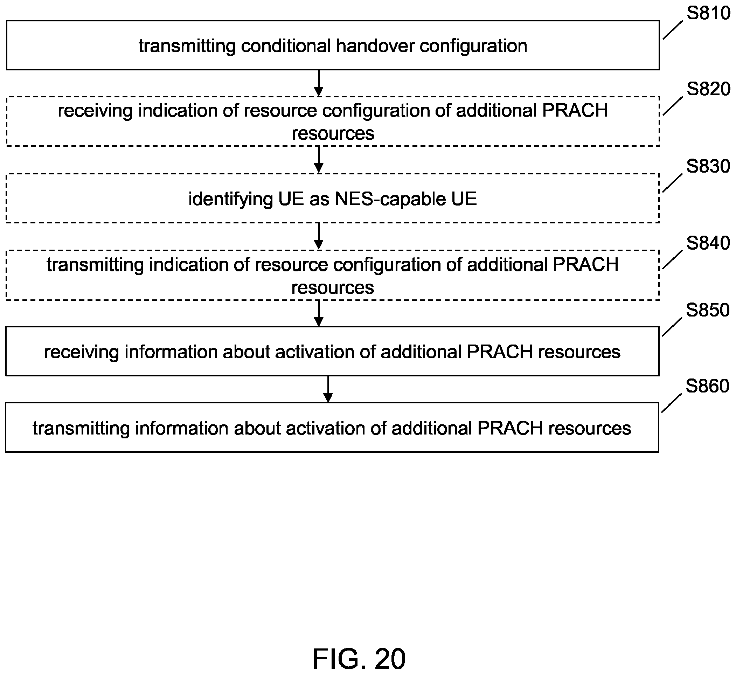

FIG. 20 shows a flowchart of a third example method or process (e.g. corresponding to or relating to or based on the third example of the aforementioned conditional handover procedures). This example method or process may be performed or carried out at/by an apparatus. The apparatus may implement (at least in part) a base station of a serving cell of a user equipment or, stated in other words, the method or process may be a method or process of (or, stated in other words, operable or for use in/by) a base station of a serving cell of a user equipment. The base station of a serving cell of a user equipment may be an example of a source gNB/cell (cell A) of a communication system in the aforementioned conditional handover procedures.

As shown in FIG. 20, the method or process comprises a step/operation (S810) of transmitting, to the user equipment, a conditional handover configuration for a conditional handover of the user equipment, wherein the conditional handover configuration indicates a candidate target cell of the conditional handover, a step/operation (S850) of receiving, from the base station of the candidate target cell, information about activation of one or more additional physical random access channel, PRACH, resources configured at the candidate target cell, and a step/operation (S860) of transmitting, to the user equipment, information about the activation of the one or more additional PRACH resources configured at the candidate target cell.

As shown in FIG. 20, the method or process may comprise a step/operation (S820) of receiving, from the base station of the candidate target cell, an indication of a resource configuration of the one or more additional PRACH resources at the candidate target cell. The method or process may comprise a step/operation (S840) of transmitting, to the user equipment, an indication of a resource configuration of the one or more additional PRACH resources at the candidate target cell of the conditional handover. The method or process may comprise a step/operation (S830) of identifying the user equipment as a user equipment capable of detecting additional PRACH resources and/or a network energy saving, NES, capable user equipment, and a step/operation (S840) of transmitting the indication of the resource configuration to the user equipment as a result of identifying the user equipment as a user equipment capable of detecting additional PRACH resources and/or a network energy saving, NES, capable user equipment.

An apparatus (e.g. base station) which is adapted, configured or operable to perform or carry out the functionalities or operations shown in FIG. 20 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 20, any one of blocks S810-S860 can be regarded as (representation of) an instruction, a circuitry, or the like of a related apparatus (e.g. base station).

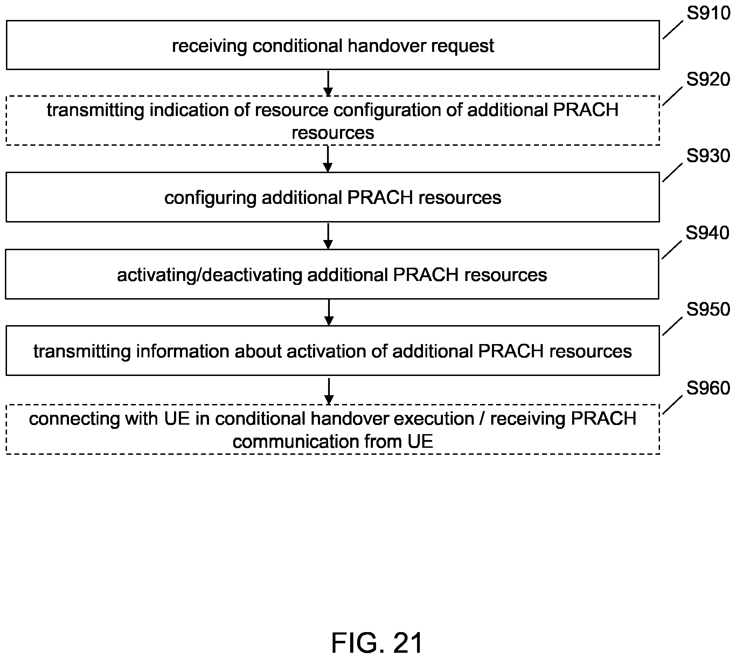

FIG. 21 shows a flowchart of a third example method or process (e.g. corresponding to or relating to or based on the third example of the aforementioned conditional handover procedures). This example method or process may be performed or carried out at/by an apparatus. The apparatus may implement (at least in part) a base station of a candidate target cell of a conditional handover of a user equipment or, stated in other words, the method or process may be a method or process of (or, stated in other words, operable or for use in/by) a base station of a candidate target cell of a conditional handover of a user equipment. The base station of a candidate target cell of a conditional handover of a user equipment may be an example of a target gNB/cell (cell B) of a communication system in the aforementioned conditional handover procedures.

As shown in FIG. 21, the method or process comprises a step/operation (S910) of receiving, from a base station of a serving cell of the user equipment, a handover request for the conditional handover of the user equipment, a step/operation (S930) of configuring one or more additional physical random access channel, PRACH, resources, a step/operation (S940) of activating and/or deactivating the one or more additional PRACH resources configured at the candidate target cell, and a step/operation (S950) of transmitting, to the base station of the serving cell of the user equipment, information about activation of the one or more additional PRACH resources configured at the candidate target cell.

As shown in FIG. 21, the method or process may comprise a step/operation (S920) of transmitting, to the base station of the serving cell of the user equipment, an indication of a resource configuration of the one or more additional PRACH resources configured at the candidate target cell. The method or process may comprise a step/operation (S960) of connecting with the user equipment during execution of the conditional handover from the serving cell to the candidate target cell of the conditional handover using activated one or more additional PRACH resources configured at the candidate target cell or legacy one or more PRACH resources configured at the candidate target cell, and/or receiving, from the user equipment, PRACH communication upon an earliest random access channel, RACH, occasion based on activated one or more additional PRACH resources configured at the candidate target cell or legacy one or more PRACH resources configured at the candidate target cell.

An apparatus (e.g. base station) which is adapted, configured or operable to perform or carry out the functionalities or operations shown in FIG. 21 comprises corresponding structural and/or functional facilities. This apparatus (e.g. base station) may be constructed, embodied or realized in various ways. For example, the apparatus (e.g. base station) may comprise at least one processor and at least one memory storing instructions that, when executed by the at least one processor, cause the apparatus at least to perform or carry out the respective functionalities or operations, the apparatus may comprise one or more means for performing or carrying out the respective functionalities or operations, the apparatus may comprise one or more circuitry for performing or carrying out the respective functionalities or operations, or the like. In view of FIG. 21, any one of blocks S910-S960 can be regarded as (representation of) an instruction, a circuitry, or the like of a related apparatus (e.g. base station).

As is evident to a skilled person, certain/various functionalities, operations, features, etc. of the first and/or second examples can be applied accordingly. That is, the teaching of (certain/various respects of) the third example can be combined with the teaching of (certain/various respects of) the first and/or second examples, as is appropriate.

As described above, example embodiments are capable of enabling (or otherwise facilitating or realizing) conditional handover with PRACH adaptation (or, stated differently, additional PRACH resources).

As detailed above, there are disclosed various techniques referring to conditional handover with PRACH adaptation (or, stated differently, additional PRACH resources). These techniques provide for various benefits or advantages as describe herein or understandable by a skilled person. For example, one or more of these techniques can overcome or at least mitigate issues arising in conditional handover procedures, ass described herein. For example, one or more of these techniques can avoid an ambiguity when performing CHO towards a target cell that may enable additional PRACH resources (e.g. for NES-capable UEs), and/or ensure up-to-date information about additional PRACH resources (e.g. for NES-capable UEs) among nodes of a communication system or CHO procedure, and/or prevent (e.g. NES-capable) UEs from experiencing long latency when legacy PRACH resources are sparse in the target cell while additional PRACH resources are/can made available (e.g. at a target cell for CHO).

The above-described functionality as well as its related operations, procedures, methods and processes may be implemented by respective functional elements, entities, modules, units, processors, or the like, as described below. These functional elements, entities, modules, units, processors, or the like, e.g., the implementation of one or more example embodiments, may be realized in a cloud environment, by SDN, by NFV/NFVI, or the like.

While various example embodiments are described with reference to operations, procedures, methods and processes, these example embodiments also cover respective apparatuses, entities, modules, units, network nodes and/or systems, including software and/or hardware thereof. Such apparatuses or the like can for example be realized based on the structures shown in FIGs. 2 and 3 and described above.

According to some example embodiments, any one of (at least one) processor, (at least one) memory and (at least one) interface may be implemented as individual modules, chips, chipsets, circuitries or the like, or one or more of them can be implemented as a common module, chip, chipset, circuitry or the like, respectively.

As used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to some example embodiments, a system may comprise any conceivable combination of any depicted or described apparatuses and other network elements or functional entities, which are configured to cooperate as described above.

In general, it is to be noted that respective functional blocks or elements according to various embodiments described herein can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of example embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module, and so forth, which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of example embodiments may also be able to communicate with other networks, such as a public switched telephone network or the Internet, including the Internet-of Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network, and so forth, and/or respective functionalities may be implemented by using any node, host, server, access node or entity, and so forth being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea or scope of the various example embodiments. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), and so forth, using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module, such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the description comprises software code as such comprising code means or portions or a computer program or a computer program product for performing the respective functions, as well as software (or a computer program or a computer program product) embodied on a tangible medium, such as a computer-readable (storage) medium having stored thereon a respective data structure or code means/portions or embodied in a signal or in a chip, potentially during processing thereof.

Various example embodiments also cover any conceivable combination of method steps and operations described above, and any conceivable combination of nodes, apparatuses, modules or elements described above, as long as the above-described concepts of methodology and structural arrangement are applicable.

In view of the above, there are provided measures for (e.g. enabling/facilitating/realizing) conditional handover with PRACH adaptation (or, stated differently, additional PRACH resources). Such measures may, for example, comprise that a user equipment configures for a conditional handover of the user equipment from a serving cell of the user equipment to a candidate target cell of the conditional handover, and obtains information about usability of one or more additional physical random access channel, PRACH, resources, which are configured at the candidate target cell of the conditional handover, for the conditional handover.

In view of the above, there are provided measures for (e.g. enabling/facilitating/realizing) conditional handover with PRACH adaptation (or, stated differently, additional PRACH resources). Such measures may, for example, comprise that a user equipment receives, from a base station of a serving cell of the user equipment, a conditional handover configuration for a conditional handover of the user equipment and an indication of a resource configuration of one or more additional physical random access channel, PRACH, resources at a candidate target cell of the conditional handover, identifies the candidate target cell as a target cell of the conditional handover, and transmits, to the base station of the serving cell of the user equipment, a request for informing about activation of the one or more additional PRACH resources configured at the candidate target cell.

In view of the above, there are provided measures for (e.g. enabling/facilitating/realizing) conditional handover with PRACH adaptation (or, stated differently, additional PRACH resources). Such measures may, for example, comprise that a user equipment receives, from a base station of a serving cell of the user equipment, a conditional handover configuration for a conditional handover of the user equipment, wherein the conditional handover configuration indicates a candidate target cell of the conditional handover, and receives, from the base station of the serving cell of the user equipment, information about activation of one or more additional physical random access channel, PRACH, resources configured at the candidate target cell.

Even though various example embodiments are described above with reference to the accompanying drawings, it is to be understood that the various example embodiments are not restricted thereto. Rather, it is apparent to those skilled in the art that the various example embodiments can be modified in many ways without departing from the intended scope.

## Claims

1. A user equipment, comprising:
at least one processor; and
at least one memory storing instructions that, when executed by the at least one processor, cause the user equipment at least to:
receive, from a base station of a serving cell of the user equipment, a conditional handover configuration for a conditional handover of the user equipment and an indication of a resource configuration of one or more additional physical random access channel, PRACH, resources at a candidate target cell of the conditional handover,
identify the candidate target cell as a target cell of the conditional handover, and
transmit, to the base station of the serving cell of the user equipment, a request for informing about activation of the one or more additional PRACH resources configured at the candidate target cell.

2. The user equipment according to claim 1, wherein the instructions, when executed by the at least one processor, cause the user equipment at least to:
determine, based on a response or absence of a response from the serving cell, activation of the one or more additional PRACH resources configured at the candidate target cell.

3. The user equipment according to claim 1 or 2, wherein the instructions, when executed by the at least one processor, cause the user equipment at least to:
receive, from the base station of the serving cell of the user equipment, a response comprising an indication of the one or more additional PRACH resources configured at the candidate target cell being activated or deactivated, and
determine, based on the response, that the one or more additional PRACH resources configured at the candidate target cell are activated or deactivated.

4. The user equipment according to any one of claims 1 to 3, wherein the instructions, when executed by the at least one processor, cause the user equipment at least to:
receive, from the base station of the serving cell of the user equipment, a response comprising an indication of different one or more additional PRACH resources configured at the candidate target cell being activated, and
determine, based on the response, that the one or more additional PRACH resources configured at the candidate target cell are deactivated, and the different one or more additional PRACH resources configured at the candidate target cell are activated.

5. The user equipment according to claim 1 or 2, wherein the instructions, when executed by the at least one processor, cause the user equipment at least to:
receive, from the base station of the serving cell of the user equipment, no response at least within a predetermined time period or a response comprising an indication of absence of a response from the candidate target cell, and
determine, based on absence of a response or the response, that the one or more additional PRACH resources configured at the candidate target cell are deactivated.

6. The user equipment according to any one of claims 2 to 4, wherein
the response is in form of or included in one of a radio resource control, RRC, message, a RRC reconfiguration complete message, a medium access control, MAC, control element, or a physical downlink control channel, PDCCH, command.

7. The user equipment according to any one of claims 1 to 6, wherein
the conditional handover configuration and/or the indication of the resource configuration are received as part of radio resource control, RRC, reconfiguration, and/or
the conditional handover configuration and/or the indication of the resource configuration are in form of or included in a radio resource control, RRC, reconfiguration message.

8. The user equipment according to any one of claims 1 to 7, wherein
the request is in form of or included in one of a radio resource control, RRC, message, UE assistance information, or a scheduling request.

9. The user equipment according to any one of claims 1 to 8, wherein the instructions, when executed by the at least one processor, cause the user equipment at least to:
evaluate fulfillment of one or more conditional handover conditions, and
identify the candidate target cell as the target cell of the conditional handover when the one or more conditional handover conditions are evaluated to be fulfilled for the candidate target cell.

10. The user equipment according to any one of claims 1 to 9, wherein the instructions, when executed by the at least one processor, cause the user equipment at least to:
determine, based on a response from the base station of the serving cell, that the one or more additional PRACH resources configured at the candidate target cell are activated and/or different one or more additional PRACH resources configured at the candidate target cell are activated, and
initiate execution of the conditional handover from the serving cell to the target cell of the conditional handover using the activated one or more additional PRACH resources configured at the candidate target cell and/or the activated different one or more additional PRACH resources configured at the candidate target cell.

11. The user equipment according to any one of claims 1 to 9, wherein the instructions, when executed by the at least one processor, cause the user equipment at least to:
determine, based on a response from the base station of the serving cell or absence of a response from the base station of the serving cell, that the one or more additional PRACH resources configured at the candidate target cell are deactivated, and
initiate execution of the conditional handover from the serving cell to the target cell of the conditional handover using one or more legacy PRACH resources configured at the candidate target cell.

12. The user equipment according to any one of claims 1 to 11, wherein the instructions, when executed by the at least one processor, cause the user equipment at least to:
determine, based on a response from the base station of the serving cell, that the one or more additional PRACH resources configured at the candidate target cell are activated and/or different one or more additional PRACH resources configured at the candidate target cell are activated, and
initiate execution of the conditional handover from the serving cell to the target cell of the conditional handover upon an earliest random access channel, RACH, occasion, wherein the earliest RACH occasion is the activated one or more additional PRACH resources configured at the candidate target cell or one or more legacy configured at the candidate target cell.

13. The user equipment according to any one of claims 1 to 12, wherein the one or more additional PRACH resources comprise:
PRACH resources being configured at the candidate target cell of the conditional handover as a result of PRACH adaptation and/or in response to a handover request for the conditional handover, and/or
PRACH resources being configured for a user equipment capable of detecting additional PRACH resources and/or a network energy saving, NES, capable user equipment, and/or
PRACH resources being semi-statically configured and being able to be dynamically activated or deactivated.

14. The user equipment according to any one of claims 1 to 13, wherein
the user equipment is capable of detecting additional PRACH resources, and/or
the user equipment is a network energy saving, NES, capable user equipment, and/or
the user equipment is in radio resource control, RRC, connected mode, and/or
the serving cell of the user equipment is a source cell of the conditional handover.

15. A method at a user equipment, comprising:
receiving, from a base station of a serving cell of the user equipment, a conditional handover configuration for a conditional handover of the user equipment and an indication of a resource configuration of one or more additional physical random access channel, PRACH, resources at a candidate target cell of the conditional handover,
identifying the candidate target cell as a target cell of the conditional handover, and
transmitting, to the base station of the serving cell of the user equipment, a request for informing about activation of the one or more additional PRACH resources configured at the candidate target cell.

16. A base station of a serving cell of a user equipment, comprising:
at least one processor; and
at least one memory storing instructions that, when executed by the at least one processor, cause the user equipment at least to:
transmit, to the user equipment, a conditional handover configuration for a conditional handover of the user equipment and an indication of a resource configuration of one or more additional physical random access channel, PRACH, resources at a candidate target cell of the conditional handover,
receive, from the user equipment, a request for informing about activation of the one or more additional PRACH resources configured at the candidate target cell, and
transmit, to a base station of the candidate target cell, a request for informing about activation of the one or more additional PRACH resources configured at the candidate target cell.

17. A base station of a candidate target cell of a conditional handover of a user equipment, comprising:
at least one processor; and
at least one memory storing instructions that, when executed by the at least one processor, cause the user equipment at least to:
receive, from a base station of a serving cell of the user equipment, a handover request for the conditional handover of the user equipment,
configure one or more additional physical random access channel, PRACH, resources, receive, from the base station of the serving cell of the user equipment, a request for informing about activation of the one or more additional PRACH resources configured at the candidate target cell, and
transmit, to the base station of the serving cell of the user equipment, a response comprising an indication of the one or more additional PRACH resources configured at the candidate target cell being activated and/or deactivated or an indication of different one or more additional PRACH resources configured at the candidate target cell being activated.
